# FASCICULE DE BREVET EUROPEEN

(11) **EP 0 403 995 B1**
(45) Date de publication et mention de la délivrance du brevet: **30.11.1994**
(21) Numéro de dépôt: 90111418.1
(22) Date de dépôt: 18.06.1990
(51) Int. Cl.: H04L 12/56

(54) **Procédé et dispositif d'évaluation du débit de circuits virtuels empruntant une voie de transmission à multiplexage temporel asynchrone**
Verfahren und Vorrichtung zur Flussberechnung virtueller Verbindungen über einen asynchronen Zeitmultiplexübertragungsweg
Method and device for evaluating the rate of virtual circuits on an asynchronous time division multiplex transmission path

(30) Priorité: 20.06.1989 FR 8908192
(43) Date de publication de la demande: 27.12.1990
(73) Titulaire: ALCATEL CIT, 75008 Paris (FR)
(72) Inventeur: Thiebaut, Georges, F-22700 Perros Guirec (FR); Le Bihan, Denis, F-22300 Lanmerin (FR)
(74) Mandataire: Weinmiller, Jürgen

(56) Documents cités:
- EP-A- 0 241 113
- PATENT ABSTRACTS OF JAPAN, vol. 9, no. 39 (E-297)[1762], 19 février 1985, page157 E 297;& JP-A-59 181 854
- PATENT ABSTRACTS OF JAPAN, vol. 9, no. 169 (E-328)[1892], 13 juillet 1985, page 25 E 328;& JP-A-6041841

## Description

La présente invention concerne un procédé et un dispositif d'évaluation du débit de circuits virtuels empruntant une voie de transmission à multiplexage temporel asynchrone.

Une voie de transmission à multiplexage temporel asynchrone est une voie de transmission acheminant des messages de données dans des structures de données numériques appelées cellules. Chaque cellule comprend un en-tête constitué, par exemple, de quatre caractères à huit bits et un corps de message constitué d'un nombre défini de caractères, 32 par exemple. Sur la voie de transmission, de telles cellules se suivent sans interruption. S'il n'y a pas de message à transmettre, la voie de transmission achemine une cellule "vide", c'est-à-dire une cellule de même format qu'une cellule de message et comportant une information conventionnelle aisément reconnaissable. Des dispositions sont prises pour maintenir une proportion suffisante de telles cellules vides dans le flot des cellules de message ; elles servent en effet, notamment, à la synchronisation de l'extrémité de réception sur le format des cellules.

L'en-tête de chaque cellule de message contient sur deux caractères par exemple, une information définissant, à l'intention de l'extrémité de réception, la direction dans laquelle le corps de message devra être retransmis. Les deux autres caractères de l'en-tête contiennent des informations de service et, notamment, une information de contrôle de code et de détection d'erreur relative aux deux caractères de destination précédents. La même information se retrouve dans les en-têtes de cellules irrégulièrement espacées, qui ont la même destination. Elle identifie ainsi une sorte de circuit virtuel occupant une partie de la capacité de transmission de la voie de transmission. Plus généralement, ce circuit virtuel va occuper la voie de transmission en lui apportant un certain débit, mesuré par exemple en cellules par unité de temps, et ce débit est fluctuant. L'invention a précisément pour objet l'évaluation de ce débit.

La voie de transmission supporte à tout instant plusieurs circuits virtuels dont les cellules s'intercalent de manière irrégulière dans ce qui est couramment appelé un multiplexage temporel asynchrone. Les débits - fluctuants - des différents circuits virtuels sont différents. La somme de ces débits est limitée par le débit maximal de la voie de transmission. Elle fluctue aussi. Cela laisse la place à la transmission de cellules vides.

Par ailleurs, le nombre de circuits virtuels qui peuvent être séparément identifiés dépend du nombre de bits dévolus à cette information dans l'en-tête des cellules. Le nombre maximal de circuits virtuels est quant à lui déterminé, entre autres, par le nombre de circuits virtuels auquel on aboutit en divisant le débit maximal de la voie de transmission par le débit minimal d'une source de données pouvant emprunter un circuit virtuel. Il est très élevé et atteint par exemple 64 K.

Mais on destine la transmission à multiplexage temporel asynchrone aux plus larges domaines d'application et les débits à prévoir pour les sources pouvant emprunter un circuit virtuel s'étagent dans une vaste gamme de débits (par exemple de quelques ki- lobits à quelques centaines de mégabits par seconde). Le nombre de circuits virtuels actifs sera donc en général bien moindre que leur nombre maximal.

Une voie de transmission à multiplexage temporel asynchrone est donc faite pour acheminer les données fournies par des sources aux débits très variés et fluctuant. En aval, des équipements de commutation et de transmission acheminent les messages contenus dans les cellules vers leurs destinations. Il convient donc de vérifier, au niveau de la voie de transmission considérée, pour ne pas risquer d'engorgement en aval, qu'aucune source, par fraude ou par suite d'une défaillance, n'apporte un débit supérieur à celui qui lui est globalement attribué. Si cela se produit, l'action corrective couramment admise est d'empêcher l'acheminement par la voie de transmission de toute cellule considérée comme excédentaire par rapport au débit globalement attribué au circuit virtuel, ou tout au moins de marquer la cellule excédentaire en tant que telle, pour qu'elle soit rejetée plus loin, en cas d'engorgement. La présente invention concerne un système d'évaluation du débitde circuits virtuels permettant d'accomplir une telle vérification et de signaler ainsi les cellules excédentaires.

On connaît déjà des systèmes de ce type. Par exemple, le document de brevet FR-A-2616024 propose à cet effet d'employer une horloge et un compteur doté d'un seuil par circuit virtuel. Le compteur avance à chaque cellule et recule à chaque impulsion de l'horloge. Si la cadence des cellules devient supérieure à celle des impulsions d'horloge, le compteur atteint le seuil et une signalisation est donnée.

Un tel système n'est pas applicable quand le nombre de circuits virtuels est très élevé et la durée des cellules très courte (500 ns, par exemple), le temps nécessaire pour faire évoluer tous les compteurs à la suite d'une impulsion d'horloge excédant la durée d'une cellule.

La présente invention a donc pour objet un procédé et un dispositif d'évaluation du débit de circuits virtuels permettant de faire face à de telles exigences. L'invention apporte de plus des caractéristiques additionnelles visant à une grande souplesse d'utilisation et permettant de faire face aux exigences de la plus grande variété des cas d'exploitation.

Le procédé d'évaluation du débit de circuits virtuels acheminant des cellules et empruntant une voie de transmission à multiplexage temporel asynchrone de l'invention comprend l'emploi d'une mémoire dans laquelle à chaque circuit virtuel est affecté un emplacement contenant un ensemble de données - que l'on appellera contexte - définissant les conditions de l'évaluation du débit de ce circuit virtuel et, à la réception de chaque cellule, la lecture du contexte du circuit virtuel auquel appartient cette cellule, en vue de l'évaluation du débit de ce circuit virtuel, et il comprend aussi l'emploi d'une horloge aménagée pour fournir une heure courante associée à ce circuit virtuel, exprimée dans une unité déterminée ; il se caractérise en ce qu'une indication d'heure de début d'intervalle de mesure est enregistrée dans ledit contexte d'un circuit virtuel, à l'arrivée d'une cellule de ce circuit virtuel, en ce que, à l'arrivée d'une cellule suivante du même circuit virtuel, ledit contexte est lu dans l'emplacement de mémoire affecté à ce circuit virtuel, en ce que de l'heure courante, alors fournie par ladite horloge, est soustraite l'heure de début d'intervalle de mesure fournie par le contexte lu, une différence de temps étant ainsi établie, en ce que ledit contexte comprend aussi une durée spécifiée d'intervalle de mesure et un nombre de cellules déjà reçues, et en ce qu'il est prévu de comparer, à la réception de chaque cellule, ladite différence de temps et ladite durée d'intervalle de mesure, ainsi que d'incrémenter ledit nombre de cellules déjà reçues, tant que ladite différence de temps est inférieure à ladite durée d'intervalle de mesure, tandis que ledit nombre de cellules déjà reçues est fourni comme mesure du débit moyen du circuit virtuel, seulement lorsque ladite différence de temps est égale ou supérieure à ladite durée d'intervalle de mesure, en même temps que ledit nombre de cellules déjà reçues et l'heure de début d'intervalle de mesure sont réinitialisés.

De telles dispositions permettront d'évaluer le débit du circuit virtuel à partir d'observations effectuées à l'arrivée de chaque cellule et sans autre accès au contexte que ceux qui sont effectués à cette occasion, ce qui permettra de traiter un grand nombre de circuits virtuels. Elle permettront aussi d'effectuer une mesure de façon économique en choisissant un intervalle de temps de durée appropriée, tel que le nombre de cellules à recevoir dans l'intervalle de temps de mesure, au trafic nominal, permette d'obtenir la précision désirée.

Le procédé de l'invention se caractérise encore en ce qu'une indication d'heure de début est aussi enregistrée dans ledit contexte d'un circuit virtuel, à l'arrivée d'une cellule de ce circuit virtuel, en ce que, à l'arrivée d'une cellule suivante du même circuit virtuel, ledit contexte est lu dans l'emplacement de mémoire affecté à ce circuit virtuel, en ce que de l'heure courante, alors fournie par ladite horloge, est soustraite ladite heure de début fournie par le contexte lu, une deuxième différence de temps étant ainsi établie et constituant une mesure de débit instantané du circuit virtuel, définie comme l'intervalle de temps qui s'est écoulé entre deux cellules, exprimé dans ladite unité déterminée, en ce que cette mesure de débit instantané est fournie à des moyens d'évaluation, en vue de déterminer la nécessité d'une action corrective, et en ce que ladite heure courante est alors enregistrée dans le contexte, en tant qu'heure de début.

De telles dispositions permettront d'établir une mesure de débit permettant une action corrective, en cas de dépassement de débit, à chaque cellule reçue, c'est-à-dire permettant une action quasi-immédiate dans le cas où le débit deviendrait soudainement excessif.

En outre, le contexte comprend un compte de cellules reçues et il est prévu d'incrémenter ce compte à la réception de chaque cellule du circuit virtuel, puis de comparer le compte incrémenté avec une valeur de compte spécifiée, et, seulement lorsque ladite valeur de compte spécifiée est atteinte par ledit compte de cellules reçues, de fournir ladite différence de temps comme mesure de débit instantané du circuit virtuel, définie comme l'intervalle de temps qui s'est écoulé entre deux cellules non consécutives, tandis que ledit compte de cellules reçues est réinitialisé.

De telles dispositions permettront d'effectuer également une évaluation portant sur l'intervalle moyen entre des cellules dont le nombre est défini par ladite valeur de compte spécifiée. Cette dernière valeur peut d'ailleurs être incluse dans le contexte et donc être paramètrable.

Selon une autre caractéristique de l'invention, il est prévu d'accumuler plusieurs d'une desdites mesures de débit, successivement établies pour un même circuit virtuel, et de les présenter ensemble comme une mesure de débit accumulé.

Selon une autre caractéristique de l'invention, le contexte comprend au moins une donnée constituant un compteur de débit et il est prévu d'en modifier le contenu par addition de la différence entre une valeur déterminée, correspondant à un débit autorisé, et une desdites mesures de débit, puis de comparer la position atteinte par ce compteur de débit par rapport à une position extrême spécifiée, et, si cette position extrême est atteinte ou dépassée, d'émettre un signal manifestant la nécessité d'une action corrective.

Selon une autre caractéristique de l'invention le contexte comprend au moins un seuil de débit et il est prévu de comparer une desdites mesures de débit avec ce seuil et d'actionner un compteur de débit dans un premier sens, si ce seuil est atteint ou dépassé, ou dans un autre sens, si ce seuil n'est pas atteint, ainsi que de déterminer qu'un tel actionnement a amené le compteur de débit dans une position extrême dudit premier sens, et alors de fournir un signal manifestant la nécessité d'une action corrective.

Selon une variante de l'invention, il est prévu, dans le contexte, une valeur de compte et plusieurs seuils de débit et il est prévu de comparer une desdites mesures de débit avec ces seuils, pour déterminer dans quel intervalle entre seuils elle se trouve, et il est prévu de modifier ladite valeur de compte d'une quantité qui est fonction dudit intervalle déterminé, ainsi que de déterminer l'arrivée en position extrême dans un premier sens de cette valeur, pour fournir alors ledit signal manifestant la nécessité d'une action corrective.

Selon une autre caractéristique de l'invention, le contexte comprend une indication de débit maximal autorisé et il est prévu de comparer, à l'arrivée de chaque cellule, le débit observé avec ladite indication de débit maximal et, au cas où il atteint ou dépasse ledit débit maximal autorisé, de fournir ledit signal manifestant la nécessité d'une action corrective.

Selon une autre caractéristique de l'invention, l'arrivée en position extrême dudit compteur de débit ou de ladite valeur de compte donne lieu à la mise en application dans le contexte d'une valeur de débit limite dépendant du seuil de débit associé, qui remplit le même rôle que ladite indication de débit maximal autorisé.

Le dispositif d'évaluation du débit de circuits virtuels acheminant des cellules et empruntant une voie de transmission à multiplexage temporel asynchrone de la présente invention comprend une mémoire dans laquelle à chaque circuit virtuel est affecté un emplacement contenant un ensemble de données - que l'on appellera contexte - définissant les conditions de l'évaluation du débit de ce circuit virtuel, des moyens permettant, à la réception de chaque cellule, la lecture du contexte du circuit virtuel auquel appartient cette cellule, en vue de l'évaluation du débit de ce circuit virtuel, ainsi qu'une horloge aménagée pour fournir une heure courante associée à ce circuit virtuel, exprimée dans une unité déterminée ; il se caractérise en ce qu'il comprend des moyens pour enregistrer une indication d'heure de début d'intervalle de temps dans ledit contexte d'un circuit virtuel, à l'arrivée d'une cellule de ce circuit virtuel, des moyens pour, à l'arrivée d'une cellule suivante du même circuit virtuel, lire ledit contexte dans l'emplacement de mémoire affecté à ce circuit virtuel, des moyens pour soustraire de l'heure courante, alors fournie par ladite horloge, l'heure de début fournie par le contexte lu, une première différence de temps étant ainsi établie, en ce que le contexte comprend aussi une durée spécifiée d'intervalle de mesure et un nombre de cellules déjà reçues, et en ce qu'il est prévu des moyens pour comparer, à la réception de chaque cellule, ladite différence de temps et ladite durée d'intervalle de mesure, des moyens pour incrémenter alors ledit nombre de cellules déjà reçues, tant que ladite différence de temps est inférieure à ladite durée d'intervalle de mesure, ainsi que des moyens pour fournir ledit nombre de cellules, déjà reçues comme mesure du débit moyen du circuit virtuel, seulement lorsque ladite différence de temps est égale ou supérieure à ladite durée d'intervalle de mesure, en même temps que pour réinitialiser ledit nombre de cellules déjà reçues et l'heure de début d'intervalle de mesure.

Selon une autre caractéristique de l'invention, il est prévu des moyens pour enregistrer une indication d'heure de début dans ledit contexte d'un circuit virtuel, à l'arrivée d'une cellule de ce circuit virtuel, des moyens pour, à l'arrivée d'une cellule suivante du même circuit virtuel, lire ledit contexte dans l'emplacement de mémoire affecté à ce circuit virtuel, des moyens pour soustraire de l'heure courante, alors fournie par ladite horloge ladite heure de début, une deuxième différence de temps étant ainsi établie et constituant une mesure de débit instantané du circuit virtuel, définie comme l'intervalle de temps qui s'est écoulée entre deux cellules, des moyens pour fournir cette mesure de débit instantané à des moyens d'évaluation, en vue de déterminer la nécessité d'une action corrective, et des moyens pour déterminer alors l'enregistrement de ladite heure courante dans le contexte, en tant qu'heure de début.

Selon une autre caractéristique de l'invention, le contexte comprend un compte de cellules reçues, des moyens sont prévus pour incrémenter ce compte à la réception de chaque cellule du circuit virtuel, des moyens sont prévus pour comparer le compte incrémenté avec une valeur de compte spécifiée fournie par le contexte, et des moyens sont prévus, opérant seulement lorsque ladite valeur de compte spécifiée est atteinte par ledit compte de cellules reçues, pour fournir ladite différence de temps comme mesure de débit instantané du circuit virtuel, définie comme l'intervalle de temps qui s'est écoulé entre deux cellules non consécutives, tandis que ledit compte de cellules reçues est réinitialisé.

Selon une autre caractéristique de l'invention, des moyens sont prévus pour accumuler plusieurs d'une desdites mesures de débit, successivement établies pour un même circuit virtuel, et pour les présenter ensemble comme une mesure de débit accumulé.

Selon une autre caractéristique de l'invention, le contexte comprend au moins un compteur de débit et des moyens sont prévus pour en modifier le contenu par addition de la différence entre une valeur déterminée, correspondant à un débit autorisé, et une desdites mesures de débit, ainsi que des moyens pour comparer la position atteinte parce compteur de débit par rapport à une position extrême spécifiée, puis, si cette position extrême est atteinte ou dépassée, pour émettre un signal manifestant la nécessité d'une action corrective.

Selon une autre caractéristique de l'invention le contexte comprend au moins un seuil de débit et des moyens sont prévus pour comparer une desdites mesures de débit avec ce seuil et pour actionner un compteur de débit dans un premier sens, si ce seuil est atteint ou dépassé, ou dans l'autre sens, si ce seuil n'est pas atteint, des moyens étant en outre prévus afin de déterminer qu'un tel actionnement a amené le compteur de débit dans une position extrême dudit premier sens, et alors de fournir un signal manifestant la nécessité d'une action corrective.

Selon une autre caractéristique de l'invention, il est prévu plusieurs seuils de débit et une valeur de compte et des moyens sont prévus pour comparer une desdites mesures de débit avec ces seuils, pour déterminer dans quel intervalle entre seuils elle se trouve, et il est prévu de modifier ladite valeur de compte d'une quantité qui est fonction dudit intervalle déterminé, des moyens étant en outre prévus afin de déterminer qu'une telle modification a amené ladite valeur de compte dans une position extrême d'un premier sens, et alors de fournir un signal manifestant la nécessité d'une action corrective.

Selon une autre caractéristique de l'invention, le contexte comprend une indication de débit maximal autorisé et des moyens sont prévus pour comparer, à l'arrivée de chaque cellule, le débit observé avec ladite indication de débit maximal et, au cas où il atteint ou dépasse ledit débit maximal, pour fournir ledit signal manifestant la nécessité d'une action corrective.

Selon une autre caractéristique de l'invention, des moyens sont prévus pour, à l'arrivée en position extrême d'un desdits compteurs de débit ou valeurs de compte, enregistrer dans le contexte une valeur de débit limite dépendant du seuil de débit associé, qui remplit le même rôle que ladite indication de débit maximal autorisé.

Selon une autre caractéristique de l'invention, ladite horloge fournit l'heure courante associée au circuit virtuel par le moyen d'un module de sélection d'horloge commandé par une indication de sélection d'horloge fournie par ledit contexte du circuit virtuel et qui sélectionne en conséquence un groupe de sorties d'une horloge-mère, la sortie de poids le plus faible caractérisant une unité déterminée dans laquelle sont mesurées les durées intervenant dans les évaluations de débit, cette unité déterminée étant choisie de façon à permettre d'atteindre la précision désirée dans ces évaluations.

On obtient ainsi que les indications d'heure utilisées en relation avec un circuit virtuel sont adaptées au débit propre à ce circuit virtuel, ce qui permet d'obtenir la précision requise sans devoir augmenter la dimension, en nombre de bits, de ces indications.

Les demandes de brevets européens n°90111419.9 (EP-A-O 403 996) et 90111420.7 (EP-A-O 403 997) déposées le même jour que la présente demande par le même demandeur couvrent séparément des aspects particuliers figurant dans certaines des revendications dépendantes de la présente demande.

Les différents objets et caractéristiques de l'invention seront détaillés dans la description qui va suivre, faite à titre d'exemple non limitatif, en se reportant aux figures annexées qui représentent :
- la figure 1, le diagramme par bloc d'un exemple de réalisation de l'invention,
- la figure 2, le diagramme par blocs du bloc de traitement BT du système de la figure 1,
- la figure 3, le schéma d'un mode de réalisation du module de sélection d'horloge MSH de la figure 2,
- la figure 4, le schéma d'un premier mode de réalisation du module de mesure de débit MMD de la figure 2,
- la figure 5, le schéma d'un deuxième mode de réalisation du module de mesure de débit MMD de la figure 2,
- la figure 6, le schéma d'un troisième mode de réalisation du module de mesure de débit MMD de la figure 2,
- la figure 7, le schéma d'un premier mode de réalisation du module de quantification du résultat MQR de la figure 2,
- la figure 8, le schéma d'un deuxième mode de réalisation du module de quantification du résultat MQR de la figure 2,
- la figure 9, le schéma d'un mode de réalisation du module de réduction du nombre de résultats MRR de la figure 2,
- la figure 10, le schéma d'un premier mode de réalisation du module de gestion de compte MGC de la figure 2,
- la figure 11, le schéma d'un deuxième mode de réalisation du module de gestion de compte MGC de la figure 2,
- la figure 12, le schéma d'un mode de réalisation du module de décision MSC de la figure 2,
- la figure 13, le diagramme d'un assemblage fonctionnel des modules du bloc BT pour le traitement d'un circuit virtuel particulier constituant un cas d'application de l'invention,
- la figure 14, une illustration d'un exemple de contexte utilisable dans le cas d'application de la figure 13.

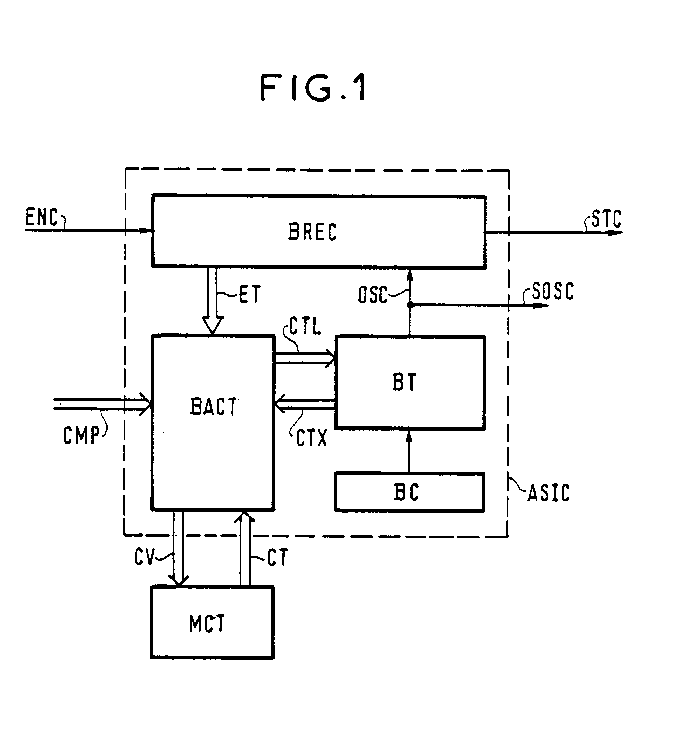

On se reportera d'abord à la figure 1 qui représente le diagramme général d'un mode de réalisation de la présente invention. Le système d'évaluation de débits de la figure 1 est interposé entre une entrée de cellules ENC et une sortie de cellules STC. Il est intercalé sur une voie de transmission à multiplexage temporel asynchrone. Pour fixer les idées, le débit binaire de la voie de transmission, reçu sur l'entrée ENC, est par exemple de 600 Mbit/s. Ce débit traverse un bloc de réception/émission de cellules BREC que l'on peut voir comme un registre à décalage. Tant que les débits des circuits virtuels supportés par la liaison sont acceptables, toute cellule reçue sur l'entrée ENC est purement et simplement retransmise sur la sortie STC, avec un retard égal, par exemple, à la durée de transmission d'une cellule, soit 0,5 f..ls environ.

Une cellule, selon l'exemple mentionné dans le préambule de cette description, comprend quatre caractères d'en-tête ; deux d'entre eux fournissent un numéro de circuit virtuel à 16 bits. La cellule comprend aussi un corps de message comprenant 32 caractères.

Dès que l'en-tête d'une cellule est disponible dans le bloc BREC, cet en-tête ET est fourni à un bloc d'accès au contexte de traitement BACT. Dans ce bloc BACT, le numéro de circuit virtuel, CV, sert d'adresse pour la lecture, dans une mémoire de contexte de traitement MCT, du contexte de traitement CT du circuit virtuel auquel appartient la cellule reçue. Ce contexte de traitement CT est un ensemble d'informations numériques, les unes semi- permanentes, c'est-à-dire fixées pour la durée d'une communication empruntant le circuit virtuel, les autres modifiables, c'est-à-dire susceptibles d'évoluer à la réception de chaque cellule du circuit virtuel. Ce contexte de traitement contient ainsi une information définissant le "passé" du circuit virtuel.

Le bloc d'accès BACT fournit le contexte de traitement lu, appelé alors CTL au bloc de traitement BT, lequel dispose par ailleurs d'une information chronométrique fournie par un bloc de compteur BC. A partir de ces deux informations, le bloc de traitement BT élabore un contexte de traitement mis à jour CTX qui est retourné au bloc d'accès BACT pour être réinscrit à la même adresse CV, et il fournit un signal OSC, dans le cas où la cellule reçue n'est pas acceptable.

Le contexte mis à jour CTX contient des informations modifiables qui ont éventuellement changé, selon le programme de traitement du bloc BT, en fonction du fait même de la réception d'une cellule et, surtout, de l'heure d'arrivée de cette cellule, indiquée par le bloc de compteur BC.

Le signal OSC est transmis au bloc BREC où, dans une première forme de mise en oeuvre, il aura pour effet de remplacer la cellule reçue par une cellule vide. Dans une deuxième forme de mise en oeuvre, le signal OSC provoque seulement le marquage d'un indicateur prévu dans l'en-tête de la cellule ; il signifiera, dans les organes de commutation que traversera ultérieurement la cellule, que celle-ci peut ne pas être retransmise en cas de surcharge. D'autres cas d'utilisation du signal OSC peuvent être imaginés, matérialisés par une sortie SOSC pour le signal OSC.

Le temps mis par les blocs BACT et BT à accomplir les opérations que l'on vient de décrire est avantageusement égal à la durée de transmission d'une cellule, de sorte que ces blocs sont ensuite disponibles pour un nouveau cycle de fonctionnement dès la réception de la cellule suivante. On pourrait toutefois, comme il est bien connu dans la technique, aménager le fonctionnement des deux blocs de manière que les opérations de lecture-traitement-réinscription d'un contexte, pour une cellule reçue, se recouvrent avec les mêmes opérations relatives à la cellule suivante, afin que le bloc d'accès BACT et le bloc de traitement BT aient chacun la durée entière d'une cellule pour les opérations relatives à cette cellule.

Les informations de contexte CT sont initialement inscrites dans la mémoire MCT par un processeur de commande non représenté communiquant avec le bloc d'accès BACT par une liaison CMP. A chaque fois, le processeur fournit une adresse de circuit virtuel CV et une information de contexte CT. On peut envisager que le bloc BACT soit, par exemple, pourvu de moyens d'identification des cellules vides et qu'il procède à l'inscription d'un nouveau contexte dans le temps de réception de chaque cellule vide.

Le bloc BACT contiendra enfin des dispositifs de contrôle de fonctionnement et le processeur, par la liaison CMP, viendra y lire des comptes-rendus de fonctionnement.

Les blocs BREC, BACT, BT et BC ont été représentés à l'intérieur d'un cadre en traits interrompus car, comme on le verra par la suite, ils peuvent être réalisés collectivement sous la forme d'un circuit intégré à la demande (ASIC).

Dans ce qui suit, on ne donnera pas de description détaillée du bloc de réception/émission BREC qui peut être, pour l'essentiel un registre à décalage, ni du bloc de compteur BC qui sera un simple compteur binaire avançant d'un pas à chaque période d'une horloge incorporée et passant cycliquement par toutes ses positions. On discutera ultérieurement du nombre d'étages de ce compteur. On ne décrira pas non plus dans le détail le bloc d'accès BACT dont les fonctions ont été clairement définies et dont la réalisation, liée à la technologie appliquée pour la mémoire MCT, est à la portée de l'homme de métier. La description détaillée suivante concerne donc seulement le bloc de traitement BT.

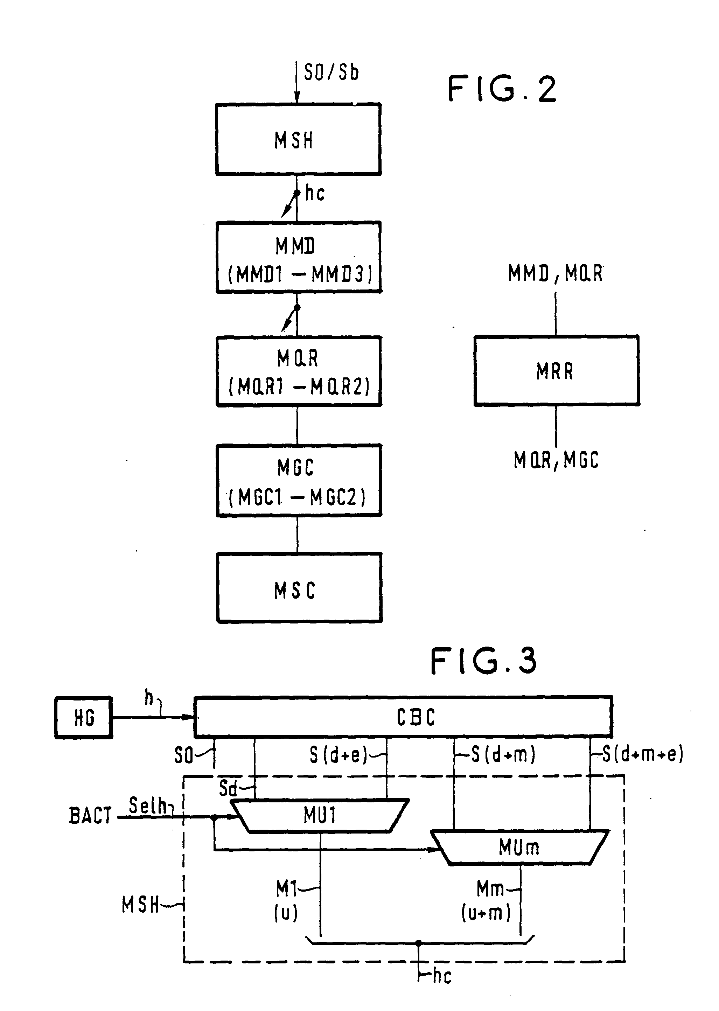

Ce bloc de traitement BT est sommairement illustré à la figure 2. Il comprend des modules de traitement de six types : au moins un module de sélection d'horloge MSH, au moins un module de mesure de débit MMD, au moins un module de quantification de résultats MQR, au moins un module de réduction du nombre de résultat MRR, au moins un module de gestion de compte MGC et au moins un module de décision MSC.

Un module de sélection d'horloge MSH est représenté à la figure 3 où figure également le compteur CBC du bloc BC, constitué d'une succession d'étages binaires commandés par une horloge HG fournissant des impulsions h. Les sorties SO à S(d+m+e) du compteur CBC sont couplées au module de sélection d'horloge qui reçoit par ailleurs, du contexte CTfourni par le bloc d'accès BACT, une indication de sélection d'horloge selh qui est une indication binaire pouvant prendre e+1 valeurs successives. Cette indication est appliquée à m multiplexeurs MU1 à MUm qui prennent en conséquence tous la même orientation. Chacun de ces multiplexeurs est connecté à un groupe de e+1 sorties du compteur CBC, les m groupes étant eux-mêmes décalés à chaque fois d'une ou plusieurs sorties, de celui du multiplexeur MU1 à celui du multiplexeur MUm. Le multiplexeur MU1 est ainsi connecté aux sorties Sd à S(d+e) du compteur CBC, tandis que le multiplexeur MUm est connecté à ses sorties S(d+m) à Sb = S(d+m+e). Finalement, les sorties M1 à Mm des m multiplexeurs fournissent une heure courante hc sous le forme d'un nombre binaire dont les poids vont de u à u+m, le poids u dépendant de la valeur de l'indication selh. Chaque circuit virtuel peut ainsi se voir doté d'une horloge appropriée à son débit, définie par l'indication selh de son contexte de traitement.

Il convient de noter, toutefois, que plusieurs blocs de sélection d'horloge semblables à celui qui vient d'être décrit pourraient être prévus ensemble. On verra par la suite que les modules de mesure de débit utilisent tous une heure courante, qui est fournie par un module de sélection d'horloge. Un module de sélection d'horloge tel que celui de la figure 2 suffit lorsque qu'une même heure courante peut être utilisée par tous les modules de mesure. On comprendra aisément que, le cas échéant, il pourrait être nécessaire de fournir aux différents modules de mesure des heures courantes différentes ; elles seront fournies par autant de modules de sélection d'horloge.

Le bloc de traitement BT comprend ensuite un ou plusieurs des modules de mesure de débit MMD1 à MMD3.

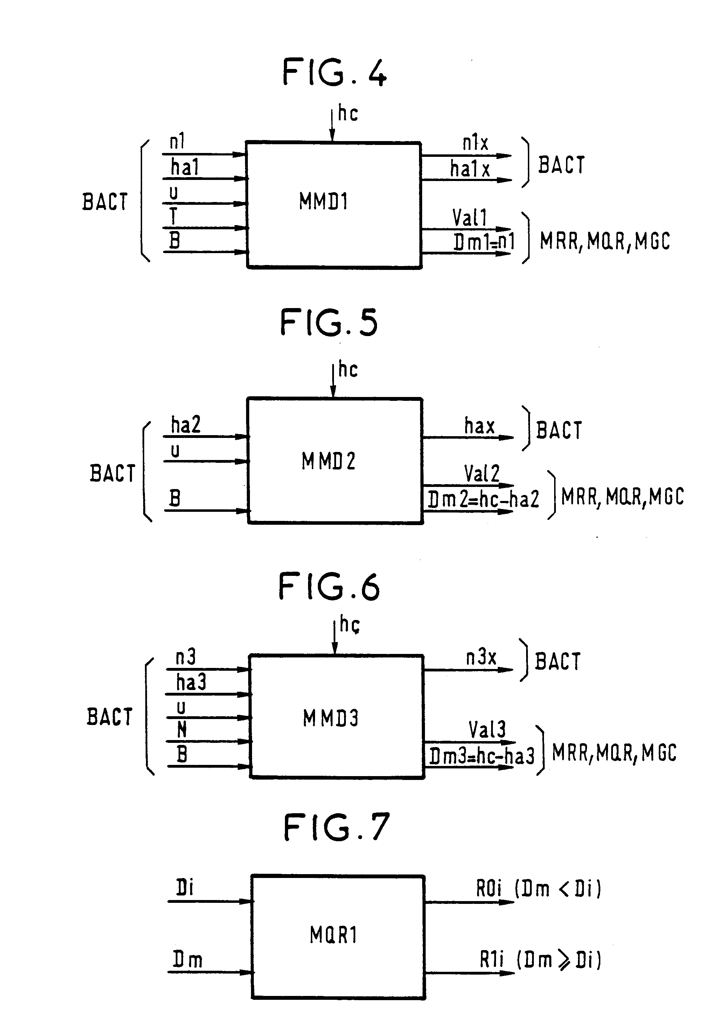

On décrira d'abord le module MMD1, en se référant à la figure 4. Ce module reçoit du contexte CT, fourni par le bloc BACT, les indications suivantes :
- la durée T d'un intervalle de mesure également appelé T, exprimée en périodes u,
- la valeur de la période u,
- une heure de début ha1 de l'intervalle de mesure T, établie antérieurement à partir de l'heure courante hc,
- le nombre n1 de cellules déjà reçues dans l'intervalle de temps T en cours,
- le nombre B de bits d'une cellule.

Il reçoit aussi l'heure courante hc fournie par le module MSH.

Le module MMD1 effectue la différence hc - ha1. Si cette différence est inférieure à T, il fournit seulement au bloc BACT une valeur n1x = n1 + 1, destinée à prendre la place de la valeur n1, dans le contexte CT. Si, par contre, cette différence est égale ou supérieure à T, il fournit un signal de validation Val1, accompagnant une valeur Dm1 = n1, à l'intention du module suivant MQR, MRR ou MGC. Il fournit alors au bloc BACT une valeur n1x = 1 et une valeur ha1x = hc, qui sont enregistrées dans le contexte CT, à la place des valeurs n1 et ha1. Ainsi, l'heure de début enregistrée dans le contexte de traitement CT est l'heure de réception d'une cellule antérieure, pour laquelle la valeur n 1 était égale à 1.

Le débit Dm1 ainsi établi à l'expiration de chaque intervalle de mesure, de durée au moins égale à T, devrait formellement avoir pour valeur n 1 *B / T*u, soit le nombre de bits reçus par seconde, si la période u est exprimée en secondes. Toutefois, comme on l'a indiqué, Dm1 = n1, et le résultat de mesure ne contient pas le facteur B/T*u. Il n'est donc pas nécessaire que le module MMD1 reçoive du contexte de traitement CT les valeurs u et B qui ne servent qu'à l'établissement du résultat. On verra par la suite que ces facteurs absents du résultat de mesure sont en fait pris en compte dans le bloc qui utilise ce résultat. Par ailleurs, on peut noter que la valeur B peut être une constante du système de transmission et que la valeur T peut être une constante du système d'évaluation. Dans ce cas, elles ne sont pas fournies par le contexte CT, mais incluses en tant que valeurs constantes dans les modules du bloc de traitement BT.

Il reste enfin a mentionner que la mesure de l'intervalle de mesure T, bien qu'elle ne soit pas effectuée rigoureusement, peut être suffisamment précise. En effet, cet intervalle commence, comme indiqué, par l'heure d'arrivée d'une cellule et le nombre de cellules déjà reçues, fixé à 1. Ensuite, les cellules sont comptées, jusqu'à ce que l'on reçoive une cellule pour laquelle la différence hc - ha1 indique que l'intervalle de mesure est dépassé. Cette dernière cellule n'entre pas dans l'indication de débit, puisque l'intervalle de mesure est terminé. Elle entrera par contre dans le compte du prochain intervalle de mesure. Donc, toutes les cellules sont comptées. L'imprécision vient de ce que les intervalles de mesure ne sont pas jointifs. Elle est au plus d'une unité sur le nombre de cellules comptées par intervalle de mesure. Avec un nombre de cellules suffisamment élevé, au débit moyen attendu, cette imprécision peut être négligeable.

Ainsi, la mesure de débit effectuée par le module MMD1 est donc fournie par un nombre de cellules déjà reçues dans l'intervalle de mesure, avant que n'arrive la cellule considérée.

Le module MMD2 de la figure 5 reçoit, outre l'heure courante hc provenant du bloc de sélection d'horloge MSH, la valeur B définie précédemment et une valeur ha2 qui est cette fois l'heure courante relevée lors de la réception de la cellule précédente, ces deux dernières valeurs provenant du contexte de traitement CT fourni par le bloc BACT.

Le module MMD2 effectue ainsi, à chaque cellule arrivée, la différence hc-ha2. Il fournit un signal de validation Val2, accompagnant une valeur Dm2 = hc - ha2, à l'intention du module suivant MQR, MRR ou MGC. Il fournit aussi au bloc BACT une valeur ha2x = hc, qui est enregistrée dans le contexte CT, à la place de la valeur ha2.

L'expression du débit ainsi établi à la réception de chaque cellule devrait rigoureusement avoir pour valeur B/(hc - ha2)*u, mais les facteurs B et u ne sont pas inclus dans le résultat de mesure Dm3 ; ils sont pris en compte dans le module suivant, comme on le verra plus loin. Et la valeur B, comme indiqué précédemment peut être une constante du système de transmission.

Dans le cas de ce module MMD2, la mesure de débit est ainsi directement fournie par la durée de l'intervalle de temps qui s'est écoulé entre la cellule qui vient d'arriver et la cellule précédente du circuitvirtuel considéré.

Le module MMD3 de la figure 6 reçoit, outre l'heure courante hc provenant du bloc de sélection d'horloge MSH, la valeur B définie précédemment, une valeur ha3 qui est cette fois l'heure courante enregistrée lors de la réception d'une première cellule d'un groupe de N cellules, un compte n3 qui est le nombre de cellules déjà reçues de ce groupe de N cellules, ainsi qu'une valeur N que doit atteindre le compte de cellules d'un groupe, ces différentes valeurs provenant du contexte de traitement CT.

Le module MMD3 effectue d'abord l'incrémenta- tion du compte n3, n3x = n3 + 1, puis compare le compte n3x à la valeur N. Si n3x < N, le module MMD3 fournit le compte n3x au bloc BACT, pour mise à jour du contexte de traitement CT (la valeur ha3 restant inchangée). Si n3x = N, le bloc MMD3 effectue la différence hc - ha3. Il fournit un signal de validation Val3, accompagnant une valeur Dm3 = hc - ha3, à l'intention du module suivant, de type MRR, MQR ou MGC. Il fournit aussi au bloc BACT une valeur ha3x = hc et une valeur n3x = O qui sont enregistrées dans le contexte CT, à la place des valeurs ha3 et n3.

L'expression rigoureuse du débit ainsi établi à la réception de chaque cellule a pour valeur :
B * N / (hc - ha3) * u,
   mais les facteurs B, N et u ne sont pas inclus dans le résultat de mesure Dm3 ; ils sont pris en compte dans le module suivant. Et la valeur B, comme indiqué précédemment peut être une constante du système de transmission. La valeur N peut quant à elle être une constante du système d'évaluation.

La mesure de débit fournie par le module MMD3 est cette fois la durée de l'intervalle de temps demandé pour la réception de N cellules. On peut aussi le voir comme l'intervalle de temps moyen entre cellules consécutives, évalué sur N cellules, multiplié par une constante, qui est aussi N.

Le bloc traitement BT comprend ensuite au moins un module de quantification du résultat MQR. Il peut prendre la forme du module MQR1 illustré à la figure 7. Ce module MQR1 reçoit une indication de mesure de débit mesuré Dm, c'est-à-dire l'un des résultats de mesure Dm1, Dm2, Dm3, en provenance de l'un des modules précédents MMD1 à MMD3, et reçoit une indication de seuil de débit Di provenant du contexte de traitement CT. Il compare l'une à l'autre et produit un signal de résultat RiO si la valeur de débit mesurée n'atteint pas le seuil, ou un signal de résultat Ri1 si la valeur de débit mesurée est égale ou supérieure au seuil. Ces signaux sont destinés à un module suivant MRR, ou directement à un des modules de gestion de compte MGC.

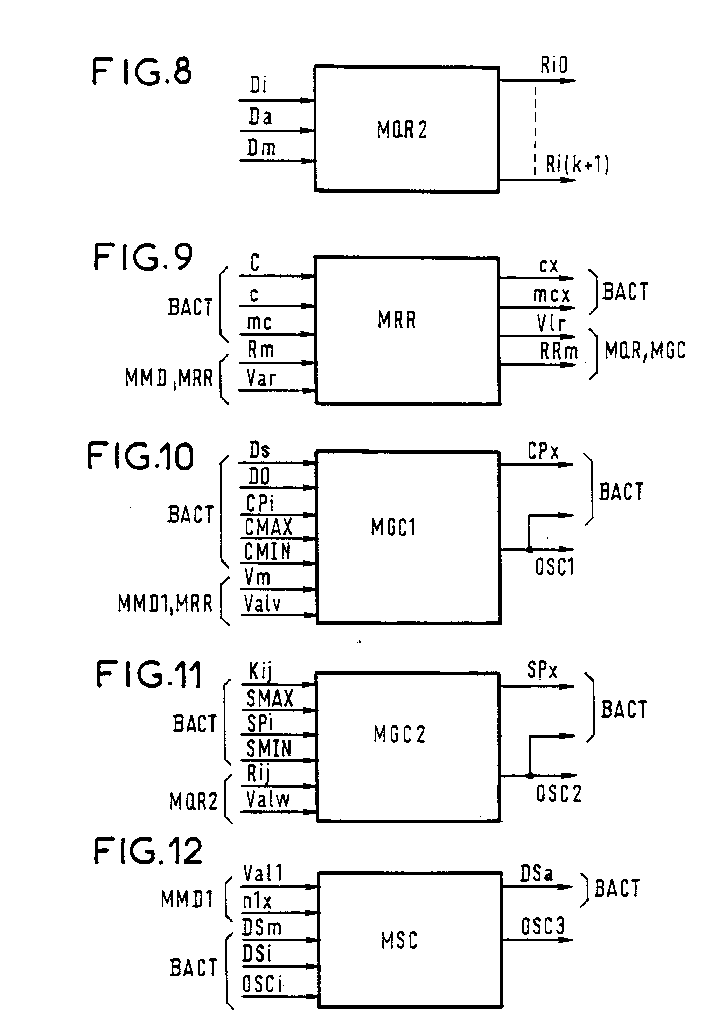

En variante, le module de quantification de résultat MQR peut prendre la forme du module MQR2 illustré à la figure 8. Outre les valeurs Di et Dm, le module MQR2 reçoit aussi du contexte CT une valeur Da. Dans le module MQR, les valeurs Di et Da sont combinées pour fournir une échelle d'indications de seuil Di, Di + Da, Di + 2*Da...,Di + k*Da et la valeur Dm est comparée à cet ensemble de seuils de sorte que le module produit un signal de résultat RiO seulement si le seuil le plus bas n'est pas atteint, le signal Ri1, si le seuil Di est franchi, mais non pas les seuils suivants, et ainsi de suite, le signal de résultat Ri(k+1) étant fourni, seulement lorsque le seuil le plus élevé Di + K*Da est franchi. Ces signaux sont destinés à des modules de réduction du nombre de résultats MRR, ou directement des modules de gestion de compte MGC.

Dans ce module MQR2, en variante, il est encore possible que les différentes valeurs de l'échelle d'indications de seuil soient directement fournies par le contexte.

Le module de réduction de nombre de résultats MRR est un élément optionnel. Un module MRR peut suivre un module de mesure de débit MMD1 à MMD3, ou encore un module de quantification de résultat MQR. Un mode de réalisation d'un tel module est représenté à la figure 9. Ce module a pourfonction d'accumuler un certain nombre de résultats de mesure, quantifiés ou non. Il reçoit du contexte de traitement CT les valeurs suivantes :
- le nombre C des résultats de mesure qu'il faut accumuler,
- le nombre c de résultats de mesure déjà accumulés,
- mc la valeur cumulée des c résultats de mesure déjà acquis.

Il reçoit par ailleurs un résultat de mesure Rm qui est le résultat de mesure Dm1, Dm2 ou Dm3 fourni par le module de mesure de débit précédent, ou le signal de résultat RiO, Ri1...,Ri(k+1) fourni par le module de quantification de résultat précédent. Il reçoit enfin un signal de validation Var qui est le signal Val1, Val2 ou Val3 du module de mesure dont provient le résultat de mesure.

En échange, ce module de réduction MRR établit un nombre cx = c + 1 et le compare au nombre C. En même temps, le module effectue la somme mcx = mc + Rm. Si cx < C, le nombre des résultats qu'il faut accumuler n'est pas encore atteint et le module MRR fournit, pour la mise à jour du contexte de traitement CT, les valeurs cx et mcx. Lorsque cx = C, le module MRR fournit au contexte cx = O et mcx = O, tandis qu'il fournit, au bloc suivant, qui peut être un bloc de quantification de résultat MQR ou un bloc de gestion de compte MGC, un signal de validation Vlr et un résultat de mesure RRm = mc, ces deux informations ayant la même signification, vis-à-vis du bloc suivant que les informations Val et Dm des modules de mesure de débit MMD1, MMD2, MMD3.

On va maintenant passer à la description de deux versions successives de module de gestion de compte MGC. La première version, MGC1, illustrée à la figure 10, s'applique, à titre d'exemple, dans le cas où le débit est mesuré à l'aide du module de mesure de débit MMD1 ou d'un module de réduction du nombre de résultats MRR employé en relation avec un tel module de mesure. Elle utilise directement la valeur de débit Vm (c'est-à-dire Dm1 ou RRm) fournie par ce module, à la réception d'une cellule, lorsque le signal de validation correspondant Valv (c'est-à-dire dérivé des signaux de validation Val1 ou Vlr, on verra comment par la suite) est présent. Par ailleurs, le module MGC1 reçoit du bloc BACT une valeur de seuil de débit Ds, une valeur minimale de débit Do, une position de compteur de débit CPi, une indication de seuil de comptage maximal CMAX et une indication de seuil de comptage minimal CMIN, informations fournies par le contexte CT et toutes exprimées dans le même unité, qui est dans ce cas un nombre de cellules. Le seuil de comptage minimal peut être de valeur O. Dans ce cas, il n'est pas fourni par le contexte.

Le module MGC1, dans cette première version, compare la valeur Vm à la valeur de débit Do. · Si Vm < Do, aucune action n'est accomplie et les informations du contexte sont laissées inchangées. Dans le cas où Vm est égal ou supérieur à Do, le compte CPi est augmenté de Vm et diminué de Ds, ce qui fournit le résultat de compte CPx qui est alors comparé à la valeur CMAX. Si CPx > CMAX, le résultat est modifié en CPx = CMAX qui est enregistrée dans le contexte CT. Cela signifie que, si le débit est supérieur à une valeur minimale, c'est-à-dire hors périodes de "silence", et si le débit évalué par ce compteur est durablement inférieur au débit seuil Ds, le compteur CPi atteint la valeur CMAX et y reste, ce qui correspond à un crédit limité pour dépassements ultérieurs éventuels. Parallèlement, le résultat CPx est comparé à la valeur CMIN. Si CPx < CMIN, le résultat est modifié en CPx = CMIN. L'ordre OSC1 est alors émis. Avec d'autres ordres de modules similaires, cet ordre fournit le signal OSC (voir description relative à la figure 1). Cela signifie que, tout crédit éventuel ayant été consommé, le débit seuil Ds est dépassé. La cellule ayant donné lieu au traitement doit être signalée comme excédentaire et donner lieu à une action corrective. L'ordre OSC1 est par ailleurs enregistré dans le contexte. On verra par la suite que cela permettra de réduire un dépassement éventuel du débit se poursuivant dans la période de mesure suivante. Pour finir, dans le cas où CMAX < CPx < CMIN, la valeur CPx devient la valeur CPi dans le contexte CT, sans autre action.

Cette même version du module de gestion de compte que l'on vient de décrire peut bien entendu donner lieu à une variante correspondant au cas où la valeur de mesure Vm est fournie par l'un des modules de mesure de débit MMD2 ou MMD3, ou par un module de réduction de nombre de résultats MRR utilisé en relation avec l'un de ces modules. Les informations fournies au module de gestion de compte sont alors des unités de durée définies par la sélection d'horloge.

Le module MGC1, dans cette variante de ladite première version, compare la valeur Vm à la valeur de débit Do. Si Vm > Do, aucune action n'est accomplie et les informations du contexte sont laissées inchangées. Dans le cas où Vm < Do, le compte CPi est diminué de Vm et augmenté de Ds, ce qui fournit le résultat de compte CPx qui est alors comparé à la valeur CMIN. Si CPx < CMIN, le résultat est modifié en CPx = CMIN qui est enregistrée dans le contexte CT. Cela signifie que, si le débit est supérieur à une valeur minimale, c'est-à-dire hors périodes de "silence", les intervalles entre cellules étant inférieurs à une valeur minimale, et si le débit évalué par ce compteur est durablement inférieur au débit seuil Ds, le compteur CPi atteint la valeur CMIN et y reste, ce qui correspond à un crédit limité pour dépassements ultérieurs éventuels. Parallèlement, le résultat CPx est comparé à la valeur CMAX. Si CPx > CMAX, le résultat est modifié en CPx = CMAX. L'ordre OSC1 (voir plus haut) est alors émis. Il est aussi enregistré dans le contexte CT. Cela signifie que, tout crédit éventuel ayant été consommé, le débit seuil Ds est dépassé. La cellule ayant donné lieu au traitement doit être signalée comme excédentaire. Pourfinir, dans le cas où CMAX < CPx < CMIN, la valeur CPx devient la valeur CPi dans le contexte CT, sans autre action.

On mentionnera seulement une troisième variante du module de gestion de compte MGC1, celle qui traite l'information que fournit un module de quantification du résultat du type MQR1 que représente la figure 7. Cette variante est en effet conforme aux deux premières, à cela près que le compteur de débit avance ou recule d'un pas selon que le seuil Di fourni au module MQR1 est franchi ou non.

La deuxième version de module de gestion de compte, MGC2, est illustrée à la figure 11. Elle est employée dans le cas où la valeur de mesure est fournie par un module de quantification de résultat tel que le module MQR2 illustré à la figure 8. On rappelle qu'à chaque cellule, le module MQR2 fournit pour différentes valeurs de seuil, une indication Rij (i = échelle de valeurs du seuil ; j = 0..., (k + 1)) caractérisant le franchissement de seuil, c'est-à-dire le fait que la valeur de mesure se trouve dans l'intervalle entre un seuil j et le seuil suivantj+1. La valeur Rij correspondant à l'un de ces seuils est fournie au module de gestion de compte MGC2, accompagnée d'un signal de validation Valw, qui n'est autre que le signal de validation fourni par le module de mesure d'où provient le résultat de mesure quantifié, en même temps qu'une valeur de compte SPi établie à la réception d'une cellule précédente comme on va le voir, une valeur de seuil maximal de comptage SMAX, une valeur de seuil minimal de comptage SMIN, ainsi qu'une échelle de comptage Kij.

L'échelle de comptage Kij est un ensemble de valeurs de comptage et chaque valeur Rij correspond à l'une de ces valeurs.

Selon l'information Rij, une des valeurs de l'échelle de comptage Kij est activée et cette valeur (qui peut être positive ou négative) est additionée à la valeur de compte SPi. Ensuite, la valeur modifiée Spx est comparée au seuil maximal SMAX. Si SPx > SMAX, l'ordre OSC2, semblable à l'ordre OSC1 (voir plus haut) est engendré. Parallèlement, la valeur modifiée SPx est comparée au seuil minimal SMIN. Si SPx < SMIN, la valeur SPx est limitée à SPx = SMIN. Aucune autre action n'est effectuée.

La même indication Rij fournie par un module de quantification du résultat peut être communiquée à plusieurs modules de gestion de compte MGC2, ayant des échelles de comptage différentes. Cela permet d'évaluer le débit du circuit virtuel selon des critères différents.

L'échelle de comptage Kij peut être une constante du système d'évaluation et, dans ce cas, elle n'est pas fournie par le contexte, mais inscrite dans le module MGC2. Selon une variante, plusieurs échelles de comptage distinctes sont inscrites dans le module MGC2 ; l'information Kij désigne l'une de ces échelles et sert, dans le module MGC2, à sélectionner et mettre en oeuvre cette échelle.

Quel que soit le module de gestion de compte considéré, l'apparition d'un ordre OSCi, correspondant à OSC1 ou OSC2 aura en outre avantageusement pour effet d'inhiber partiellement la mise à jour du contexte de traitement CT. Pour le module du type MMD2, elle interdira le remplacement de l'heure de début ha2 par l'heure courant hax. La conséquence sera que, pour ce module, la cellule ayant donné lieu à action corrective sera considérée comme n'ayant pas existé. On peut aussi prévoir que le ou les compteurs du ou des modules de gestion de compte ne soient pas non plus mis à jour. Ainsi, toute cellule excédentaire est éliminée, ce qui ramène le circuitvirtuel à un débit acceptable. Plus généralement, on peut n'opérer aucune mise à jour du contexte de traitement CT. La cellule ayant donné lieu à action corrective est alors considérée comme n'ayant pas été reçue par le dispositif d'évaluation.

On décrira ensuite, en se reportant à la figure 12, le module de correction immédiate MSC. Ce module vient compléter le module MMD1, et les modules qui lui font suite, afin de traiter le cas des débits excessifs. Du module MMD1, il reçoit, à l'arrivée de chaque cellule, la valeur n1x du nombre de cellules reçues dans l'intervalle de mesure en cours. Il en reçoit aussi le signal de validation Vall, à la fin de chaque intervalle de mesure. Du contexte CT, il reçoit une valeur de seuil maximal Dsm, des valeurs de seuils intermédiaires Dsi et des signaux correspondant aux ordres d'action corrective OSCi des modules de gestion de compte associés au module de mesure de débit MMD1, enregistrés précédemment dans le contexte CT comme indiqué plus haut.

A l'arrivée de chaque cellule, le débit observé, traduit par le nombre n 1x de cellules déjà reçues dans l'intervalle de mesure est comparé à la valeur de seuil maximale Dsm. Si n1x > Dsm, l'ordre OSC3 est donné. Il engendre l'ordre OSC, pour déclencher l'action corrective relativement à la cellule arrivée. Ainsi, lorsqu'un nombre maximal de cellules ont été reçues, et normalement traitées, dans un intervalle de mesure, les suivantes sont tout simplement considérées comme excédentaires. On peut ainsi permettre l'arrivée de cellules rapprochées, donc à débit instantané élevé, mais en nombre limité, qui ne sont pas rejetées en vertu des mesures effectuées par les modules MMD2 et/ou MMD3, tout en interdisant, si le débit élevé persiste, l'acheminement de cellules dépassant le seuil maximal défini pour la durée relativement longue de l'intervalle de mesure. De telles dispositions ne sont pas appliquées à la réception de la dernière cellule d'un intervalle de mesure, lorsque le signal Val1 est présent.

Comme précédemment, on peut prévoir que, la cellule reçue étant ainsi rejetée, la mise à jour du contexte est interdite, de sorte que toutes les cellules reçues ensuite, jusqu'à la fin de la période de mesure seront rejetées de même (sauf la première cellule reçue après la fin de l'intervalle de mesure).

De plus, le module MSC, lorsqu'il reçoit du contexte l'ordre OSCi issu d'un des modules de gestion de compte traitant le résultat de mesure issu du module MMD1, sélectionne une valeur de seuil intermédiaire correspondante Dsi fournie par le contexte CT. Le nombre de cellules n1x est également comparé à ce seuil, afin d'engendrer l'ordre OSC3 si le seuil est franchi. Cela se produit notamment, après la fin d'un intervalle de mesure, lorsque le nombre de cellules reçues, tout crédit épuisé, a finalement dépassé un seuil prescrit. Les dispositions que l'on a décrites précédemment, relativement au seuil maximal, ont veillé à ce que le dépassement soit limité. La présente mise en oeuvre d'un seuil intermédiaire vise à limiter un nouveau dépassement éventuel à un niveau encore plus faible qui est fonction de celui qui a donné lieu à l'enregistrement de l'ordre OSCi considéré.

Des dispositions qui ne seront pas décrites permettent d'effacer du contexte les ordres OSCi à la fin de la période de mesure suivante, si le dépassement correspondant ne s'est pas reproduit.

Selon l'invention, un module semblable au module MSC de la figure 12 peut également être prévu en relation avec un module MMD2 ou MMD3. Il n'y a pas lieu d'en fournir une description détaillée, car il dérive directement de celui dont on vient de traiter.

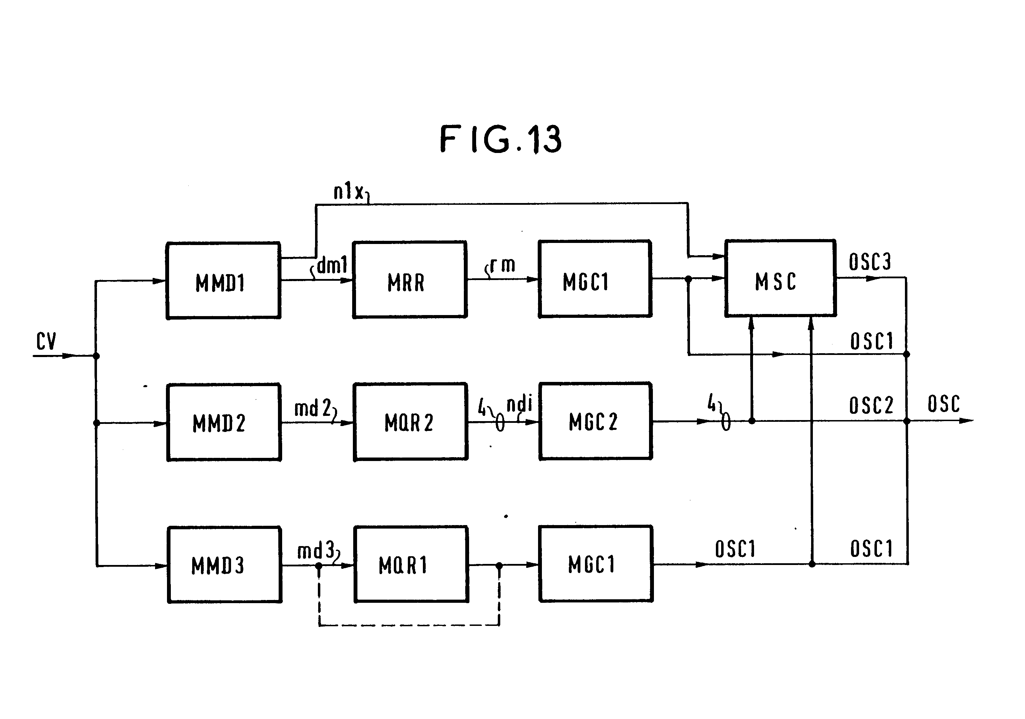

On va maintenant fournir une description d'ensemble du bloc de traitement BT, en se référant à la figure 13 qui représente un cas d'application de l'invention dans lequel, pour un circuit virtuel donné CV, seront employés, dans le bloc BT des figures 1 et 2, un de chacun des modules MMD1, MMD2, MMD3, MRR, MQR1, MQR2, MGC2 et deux modules MGC1, ainsi qu'un module MSC.

A l'arrivée de chaque cellule du circuit virtuel CV, le module MMD2 fournit une mesure de débit md2 qui comprend le signal de validation Val2 et la valeur de débit Dm2 illustrés à la figure 5. Cette valeur est la durée qui a séparé cette cellule arrivée de la cellule précédente du même circuit virtuel. Elle est fournie à un module de quantification du résultat MQR2. Dans celui-ci, elle est comparée à des seuils fournis par le contexte et qui tiennent compte des conditions dans lesquelles la mesure de débit a été établie, notamment de la période d'horloge u dans laquelle la mesure est exprimée. Le module MQR2 fournit des signaux de sortie ndi, qui comprennent les signaux de résultats RiO..., Ri (k+1) de la figure 8, définissant des niveaux de débit vers un module de gestion de compte MGC2. La valeur de compte de ce module évolue, pour chaque niveau de débit constaté, selon l'échelle de comptage et l'étendue de comptage de ce compteur définit ainsi une tolérance aux dépassements de seuils. Un dépassement persistant entraîne l'émission d'un ordre de rejet OSC2.

Dans le même temps, le module MMD3 compte l'arrivée d'une cellule et, si le compte indiqué par le contexte est atteint, il fournit une mesure de débit md3 vers un module de gestion de compteur de type MGC1, conforme à celui de la figure 10, éventuellement précédé d'un module de quantification du résultat tel que le module MQR1. Cette mesure de débit comprend le signal de validation Val3 et la valeur de débit Dm3 de la figure 6, qui n'est autre que la durée de l'intervalle de temps ayant séparé la cellule arrivée d'une Nième cellule antérieure du circuit virtuel considéré. Cette valeur de débit est additionnée au contenu du compteur de débit géré par le module MGC1, tandis qu'une valeur correspondant au débit autorisé en est soustraite. Cette dernière valeur est également fournie par le contexte et tient compte des conditions dans lesquelles la mesure de débit a été faite, notamment de la durée de la période d'horloge dans laquelle elle est exprimée. En fait le compteur additionne une valeur correspondant à la différence entre le débit autorisé et le débit observé, c'est-à-dire l'écart par rapport à un débit prescrit, et cet écart concerne l'intervalle moyen évalué sur un groupe de N cellules. De tels écarts couvrent ainsi des périodes plus larges que ceux qui sont évalués à partir du module de mesure MMD2 et masquent les pointes de débit apparaissant sur deux ou trois cellules très proches les unes des autres. Finalement, un dépassement de débit persistant entraîne la fourniture de l'odre OSC1 et donc du signal OSC, comme indiqué précédemment.

Dans le même temps encore, le module MMD1 compte l'arrivée d'une cellule dans l'intervalle de mesure. Si l'intervalle de mesure est terminé, le nombre de cellules reçues dans cet intervalle de mesure est transmis en tant que résultat de mesure dm1, qui comprend le signal de validation Val et la valeur de débit Dm1 de la figure 4. Plusieurs de tels résultats de mesure sont accumulés par le module MRR. Si le terme de l'accumulation est atteint, le module MRR fournit un résultat de mesure rm, comprenant le signal de validation Vlr et la valeur de résultat de mesure RRm de la figure 9, à un module de gestion de compte de type MGC1. Le fonctionnement de ce dernier a déjà été exposé. Là encore, la valeur soustraite est définie en tenant compte des conditions de la mesure de débit. Cela aboutit, en cas de dépassement de débit persistant à un ordre de rejet OSC1. La combinaison de l'intervalle de mesure définit dans le module MMD1 et du module d'accumulation MRR permet d'effectuer une évaluation de débit portant sur une période relativement longue, donc avec une grande précision. Avec un même module de mesure MMD1 et des modules d'accumulation MRR différents plusieurs résultats de mesure différents peuvent être obtenus portant sur les périodes d'accumulation différentes.

Par ailleurs, le module MSC reçoit le nombre de cellules n1x reçues dans l'intervalle de mesure et le compare à des seuils comme indiqué, pour fournir l'ordre de rejet OSC3 en cas de débit excessif. Il reçoit aussi les ordres de rejet OSC2 et OSC1 des modules MGC2 et MGC1, afin d'établir des valeurs de débits limite servant également à rejeter les cellules d'un circuit virtuel en cas de débit excessif persistant de celui-ci.

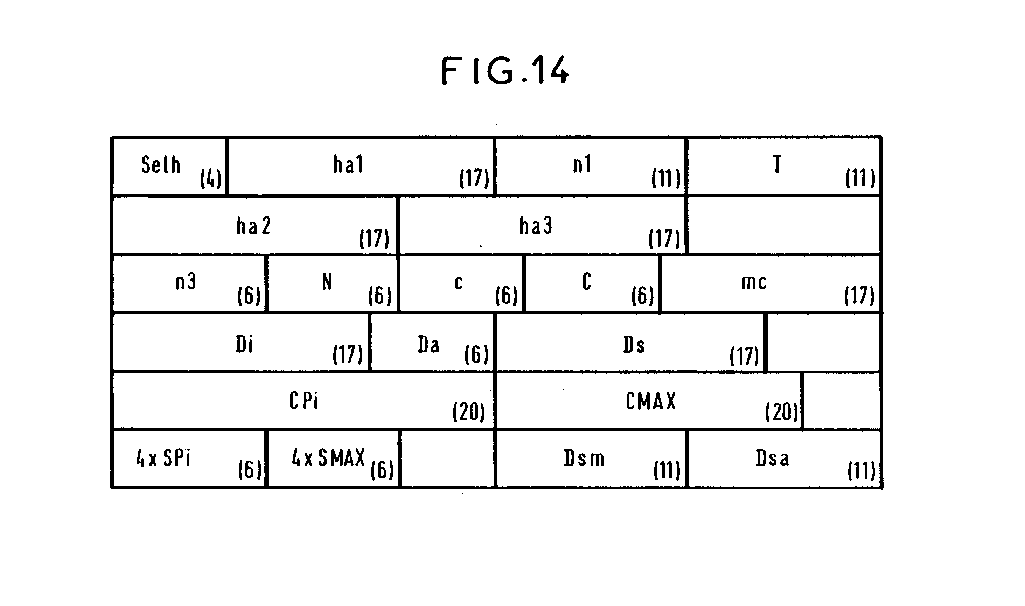

Pour terminer, on décrira, en se reportant à la figure 14, un exemple de contexte CT qui peut correspondre au cas d'application illustré par la figure 13.

La figure 14 représente un emplacement de mémoire subdivisé en espaces représentés chacun par un rectangle et contenant le nombre de bits indiqué entre parenthèses dans le coin inférieur droit. On retrouve ici des valeurs et autres indications mentionnées dans la description des modules des figures 3 à 12.

L'indication de sélection d'horloge selh comprend 4 bits. Elle permet de sélectionner une horloge parmi 16. Si une heure courante de l'horloge comprend 17 bits, le compteur CBC peut comprendre jusqu'à 32 bits.

Le nombre de bits de l'heure courante fournie par l'horloge, et des indications d'heure de débit enregistrées dans les contextes, est déterminé par le problème que posent les circuits virtuels temporairement inactifs. Il ne faut pas que, l'horloge d'un circuit virtuel ayant accompli un cycle complet sans qu'aucune cellule ne soit reçue, une décision de rejet soit prise, alors qu'en fait le débit est très faible. Une solution serait par exemple d'imposer aux sources connectées un minimum de débit, sans quoi la connexion serait rompue. Cela occasionnerait un débit artificiel. Il sera d'autant plus faible que le cycle d'horloge du circuit virtuel sera long, donc que le nombre de bits de l'heure courante sera élevée.

Pour les besoins du module MMD1, on trouve ensuite l'heure de début ha1, comprenant donc 17 bits, le nombre n1 (11 bits) de cellules déjà reçues et le nombre T (11 bits) de périodes de l'horloge définissant la durée T de l'intervalle de mesure.

Si le débit nominal moyen du circuit virtuel considéré est de 2 Mbit/s, le poids faible de l'horloge associée au circuit virtuel et sélectionnée par l'indication selh peut avoir une période de 8 f..ls, tandis que l'intervalle moyen entre cellules est de 150 f..ls, pour des cellules de 300 bits environ. Un intervalle de mesure couvrant la réception de 100 cellules en moyenne, doit être d'au moins 15000 µs, soit environ 2000 périodes de l'horloge. On retrouve ainsi la valeur de 11 bits nécessaire pour définir l'indication T. Par contre le nombre de bits nécessaire pour compter le nombre de cellules reçues dans l'intervalle de mesure doit correspondre au nombre maximal de cellules admises dans une telle période, à partir d'un débit moyen qui pourrait être exprimé par un nombre de 8 bits. Le nombre n1 prévu est ainsi de 11 bits, correspondant à un débit maximal possible de près de 20 fois le débit moyen. Les seuils Dsm et Dsa nécessaires au module de décision MSC ont par conséquent le même nombre de bits (11).

Les indications ha2 et ha3 nécessaires pour les modules MMD2 et MMD3 ont 17 bits et dérivent de la même horloge. La mesure de l'intervalle entre deux cellules consécutives s'effectue donc à 5 % environ. Comme elle a pour objet d'interdire les pointes de débit les plus fortes et les plus brèves, une telle imprécision peut être acceptée. La précision est meilleure, bien entendue pour les mesures effectuées par le module MMD3. A l'invention de ce module MMD3, le contexte fournit par ailleurs les valeurs de nombre n3 (6 bits) de cellules reçues et de nombre de cellules à recevoir N (6 bits également). Il est ainsi possible de mesurer l'intervalle moyen entre de une à 63 cellules. Les valeurs similaires c et C nécessaires au module de réduction de nombre de résultats MRR ont également 6 bits chacune, et offrent les mêmes possibilités. La valeur cumulée mc du module MRR aura ainsi 11 + 6 = 17 bits.

Le seuil Di et l'incrément de seuil Da nécessaires aux modules de quantification du résultat MQR1 et MQR2 ont respectivement 17 bits et 6 bits. La différence de temps hc - ha3, ou hc - ha2, peut avoir 17 bits. Elle sera ainsi comparée à des seuils de 17 bits, espacés d'un nombre de 6 bits.

Le seuil Ds nécessaire au module MGC1 comprend 17 bits, puisque la valeur cumulée fournie par le module MRR en comprend autant. Le seuil Do est ici considéré comme nul. Le compteur CPi commandé par ce module a 20 bits. La valeur CMAX comprend également 20 bits. La valeur CMIN peut être nulle ou constante et, par conséquent, ne pas figurer dans le contexte.

On a également mentionné des valeurs de compte SPi (4 valeurs à 6 bits chacune) et les seuils SMAX associés (4 seuils à 6 bits chacun), les seuils SMIN étant eux aussi supposés nuls ou constants. Enfin, le contexte illustré comprend aussi une valeur de seuil maximal Dsm à 11 bits et une valeur de seuil applicable Dsa, également à 11 bits, pour les besoins du module de décision de rejet immédiat MSC de la figure 12.

Un circuit virtuel semblable ayant un débit moyen nominal de 4 Mbit/s serait traité exactement de la même manière, seule l'horloge propre à ce circuit virtuel étant différente. Un circuit virtuel dont le débit moyen se situerait entre 2 et 4 Mbit/s serait traité avec l'horloge d'un circuit virtuel de 4 Mbit/s, mais en ajustant en conséquence les paramètres déterminant l'évaluation du débit, c'est-à-dire la période T (qui serait plus courte), les seuils Di des modules MQR1 ou MQR2 (qui seraient plus élevés) ou la valeur Ds du module MGC1 (qui serait plus faible dans le cas de la figure 13).

Par ailleurs, un circuit virtuel ayant le même débit moyen nominal pourrait se voir permis des pointes de débit plus, ou moins, fortes. Cela se traduirait par l'emploi de valeurs de seuil Di et Da différentes pour les modules MQR1 et MQR2. L'arrangement des modules pourrait également être modifié, comme il a été indiqué dans le cours de la description de ceux-ci.

La démarche est ainsi amplement illustrée. Les valeurs qui n'ont pas été décrites et seraient nécessaires seront ajoutées de la même manière. D'autres peuvent être considérées comme des constantes, ou à choisir parmi un petit nombre de constantes, ce qui peut permettre de réduire les dimensions du contexte. L'homme de métier connaît les techniques de codage qui permette, au prix d'un accroissement modéré de la complexité des circuits, de gagner considérablement dans le volume des données à enregistrer en mémoire.

Le mode de réalisation pratique du dispositif d'évaluation de débits de l'invention ne pose pas de problème technique, dans la mesure où les différents éléments, tels qu'on les a décrits, effectuent des opérations logiques et arithmétiques simples. Comme indiqué à la figure 1, l'ensemble des blocs BREC, BACT, BT et BC, peut être réalisé sous la forme d'un unique composant ASIC à circuits intégrés. La mémoire MCT contenant les contextes, dans l'état actuel de la technologie, sera un composant séparé. La conception modulaire du bloc de traitement BT permet de l'adapter aisément aux différentes applications envisagées. Le cas d'application illustré par la figure 13 n'est qu'un exemple et d'autres configurations sont possibles. Ces configurations distinctes pourraient être toutes obtenues à partir du même circuit intégré, en le dotant d'un nombre suffisant de modules des divers types et de moyens de configuration (registre et commutateurs de configuration), accessibles par exemple, par la liaison CMP, permettant de réaliser toute une variété de configurations de modules différentes, telle que celle de la figure 13.

## Revendications

1. Procédé d'évaluation du débit de circuits virtuels acheminant des cellules et empruntant une voie de transmission à multiplexage temporel asynchrone, comprenant l'emploi d'une mémoire dans laquelle à chaque circuit virtuel est affecté un emplacement contenant un ensemble de données - que l'on appellera contexte - définissant les conditions de l'évaluation du débit de ce circuit virtuel et prévoyant, à la réception de chaque cellule, la lecture du contexte du circuit virtuel auquel appartient cette cellule, en vue de l'évaluation du débit de ce circuit virtuel, ce procédé comprenant en outre l'emploi d'une horloge aménagée pour fournir une heure courante associée à ce circuit virtuel, exprimée dans une unité déterminée, caractérisé en ce qu'une indication d'heure de début d'intervalle de mesure (ha1) est enregistrée dans ledit contexte (CT) d'un circuit virtuel, à l'arrivée d'une cellule de ce circuit virtuel, en ce que, à l'arrivée d'une cellule suivante du même circuit virtuel, ledit contexte est lu dans l'emplacement de mémoire affecté à ce circuit virtuel, en ce que de l'heure courante (hc), alors fournie par ladite horloge, est soustraite l'heure de début d'intervalle de mesure (ha1) fournie par le contexte lu, une différence de temps (hc - ha1) étant ainsi établie, en ce que ledit contexte (CT) comprend aussi une durée spécifiée d'intervalle de mesure (T) et un nombre de cellules déjà reçues (n1), et en ce qu'il est prévu de comparer, à la réception de chaque cellule, ladite différence de temps (hc - ha1) et ladite durée d'intervalle de mesure (T), ainsi que d'incrémenter ledit de nombre de cellules déjà reçues (n1), tant que ladite différence de temps est inférieure à ladite durée d'intervalle de mesure, tandis que ledit nombre (n1) de cellules déjà reçues est fourni comme mesure du débit moyen (Dm1) du circuit virtuel, seulement lorsque ladite différence de temps est égale ou supérieure à ladite durée d'intervalle de mesure, en même temps que ledit nombre de cel-Iules déjà reçues (n1) et l'heure de début d'intervalle de mesure (ha1) sont réinitialisés.

2. Procédé d'évaluation du débit de circuits virtuels empruntant une voie de transmission a multiplexage temporel asynchrone conforme à la revendication 1, caractérisé en ce qu'une indication d'heure de début (ha2, ha3) est aussi enregistrée dans ledit contexte (CT) d'un circuit virtuel, à l'arrivée d'une cellule de ce circuit virtuel, en ce que, à l'arrivée d'une cellule suivante du même circuit virtuel, ledit contexte est lu dans l'emplacement de mémoire affecté à ce circuit virtuel, en ce que de l'heure courante (hc), alors fournie par ladite horloge, est soustraite ladite heure de début (ha2, ha3) fournie par le contexte lu, une deuxième différence de temps (hc - ha2, hc - ha3) étant ainsi établie et constituant une mesure de débit instantané (Dm2, Dm3) du circuitvirtuel, définie comme l'intervalle de temps qui s'est écoulé entre deux cellules, exprimé dans ladite unité déterminée, en ce que cette mesure de débit instantané est fournie à des moyens d'évaluation (MQR, MRR, MGC), en vue de déterminer la nécessité d'une action corrective, et en ce que ladi- i-te heure courante (hc) est alors enregistrée dans le contexte, en tant qu'heure de début.

3. Procédé d'évaluation du débit de circuits virtuels empruntant une voie de transmission à multiplexage temporel asynchrone conforme à la revendication 2, caractérisé en ce que le contexte (CT) comprend un compte de cellules reçues (n3) et qu'il est prévu d'incrémenter ce compte à la réception de chaque cellule du circuit virtuel, puis de comparer le compte incrémenté avec une valeur de compte spécifiée (N), et, seulement lorsque ladite valeur de compte spécifiée est atteinte par ledit compte de cellules reçues, de fournir ladite différence de temps comme mesure de débit instantané (Dm3) du circuit virtuel, définie comme l'intervalle de temps qui s'est écoulé entre deux cellules non consécutives, tandis que ledit compte de cellules reçues (n3) est réinitialisé.

4. Procédé d'évaluation du débit de circuits virtuels empruntant une voie de transmission à multiplexage temporel asynchrone conforme à la revendication 1, 2 ou 3, caractérisé en ce qu'il est prévu d'accumuler plusieurs d'une desdites mesures de débit (Dm1, Dm2, Dm3), successivement établies pour un même circuitvirtueI,etd'en présenter la valeur accumulée comme une mesure de débit accumulé (RRm).

5. Procédé d'évaluation du débit de circuits virtuels empruntant une voie de transmission à multiplexage temporel asynchrone conforme à la revendication 1, 2, 3 ou 4, caractérisé en ce que le contexte (CT) comprend au moins une donnée constituant un compteur de débit (CPi) et qu'il est prévu d'en modifier le contenu par addition de la différence entre une valeur déterminée (Ds), correspondant à un débit autorisé, exprimé dans ladite unité déterminée, et une desdites mesures de débit (Dm1, Dm2, Dm3, RRm), puis de comparer la position atteinte par ce compteur de débit par rapport à une position extrême spécifiée, et, si cette position extrême est atteinte ou dépassée, d'émettre un signal (OSC1) manifestant la nécessité d'une action corrective.

6. Procédé d'évaluation du débit de circuits virtuels empruntant une voie de transmission à multiplexage temporel asynchrone conforme à la revendication 1, 2, 3 ou 4, caractérisé en ce qu'il est prévu plusieurs seuils de débit (Di, Di+Da,...) et une valeur de compte (SPi) et qu'il est prévu de comparer une desdites mesures de débit (Dm1, Dm2, Dm3, RRm) avec ces seuils, pour déterminer dans quel intervalle entre seuils (RiO, Ri1...) elle se trouve, et de modifier ladite valeur de compte en fonction dudit intervalle déterminé, ainsi que de déterminer l'arrivée en position extrême d'un premier sens de cette valeur de compte pour fournir alors ledit signal (OSC2) manifestant la nécessité d'une action corrective.

7. Procédé d'évaluation du débit de circuits virtuels empruntant une voie de transmission à multiplexage temporel asynchrone conforme à la revendication 1, 2, 3 ou 4, caractérisé en ce que ledit contexte (CT) comprend au moins un seuil de débit (Di) et qu'il est prévu de comparer une desdites mesures de débit (Dm1, Dm2, Dm3, RRm) avec ce seuil et d'actionner un compteur de débit (CPi), dans un premier sens, si ce seuil est atteint ou dépassé (R1 i), ou dans un autre sens, si ce seuil n'est pas atteint (R1 i), ainsi que de déterminer qu'un tel actionnement a amené le compteur de débit dans une position extrême dudit premier sens, et alors de fournir un signal (OSC1) manifestant la nécessité d'une action corrective.

8. Procédé d'évaluation du débit de circuits virtuels empruntant une voie de transmission à multiplexage temporel asynchrone conforme à l'une quelconque des revendications précédentes, caractérisé en ce que ledit contexte (CT) comprend une indication de débit maximal autorisé (Dsm) et qu'il est prévu de comparer, à l'arrivée de chaque cellule, le débit observé avec ladite indication de débit maximal et, au cas où le débit observé atteint ou dépasse ledit débit maximal autorisé, de fournir ledit signal manifestant la nécessité d'une action corrective.

9. Procédé d'évaluation du débit de circuits virtuels empruntant une voie de transmission à multiplexage temporel asynchrone conforme à la revendication 8, caractérisé en ce que l'arrivée en position extrême dudit compteur de débit (CPi) ou de ladite valeur de compte (SPi) donne lieu à la mise en application dans le contexte d'une valeur de débit limite (Dsa) dépendant du seuil de débit associé, qui remplit le même rôle que ladite indication de débit maximal autorisé (Dsm).

10. Dispositif d'évaluation du débit de circuits virtuels acheminant des cellules et empruntant une voie de transmission à multiplexage temporel asynchrone, ce dispositif étant intercalé sur la voie de transmission et comprenant une mémoire dans laquelle chaque circuit virtuel est affecté un emplacement contenant un ensemble de données - que l'on appellera contexte - définissant les conditions de l'évaluation du débit de ce circuit virtuel, des moyens pour, à la réception d'une cellule, lire le contexte du circuit virtuel auquel appartient cette cellule, en vue de l'évaluation du débit de ce circuit virtuel, ainsi que d'une horloge aménagee pour fournir une heure courante associée a ce circuit virtuel, exprimée dans une unité déterminée, caractérisé en ce qu'il comprend des moyens (MMD1) pour enregistrer une indication d'heure de début d'intervalle de temps (ha1 ) dans ledit contexte (CT) d'un circuit virtuel, à l'arrivée d'une cellule de ce circuit virtuel, des moyens (MMD1) pour, à l'arrivée d'une cellule suivante du même circuit virtuel, lire ledit contexte dans l'emplacement de mémoire affecté a ce circuit virtuel, des moyens (MMD1) pour soustraire de l'heure courante (hc), alors fournie par ladite horloge, l'heure de début (ha1) fournie par le contexte lu, une première différence de temps (hc - ha1 ) étant ainsi établie, en ce que le contexte (CT) comprend aussi une durée spécifiée d'intervalle de mesure (T) et un nombre de cellules déjà reçues (n1), et en ce qu' il est prévu des moyens (MMD1) pour comparer, à la réception de chaque cellule, ladite différence de temps et ladite durée d'intervalle de mesure, des moyens (MMD1) pour incrémenter alors ledit nombre de cellules déjà reçues (n1), tant que ladite différence de temps est inférieure à ladite durée d'intervalle de mesure, ainsi que des moyens pour fournir ledit nombre (n1) de cellules déjà reçues comme mesure du débit moyen (Dm1) du circuit virtuel, seulement lorsque ladite différence de temps est égale ou supérieure à ladite durée d'intervalle de mesure, en même temps que pour réinitialiser ledit nombre de cellules déjà reçues (n1) et l'heure de début d'intervalle de mesure (ha1).

11. Dispositif d'évaluation du débit de circuits virtuels empruntant une voie de transmission à multiplexage temporel asynchrone conforme à la revendication 10, caractérisé en ce qu'il comprend des moyens (MMD2, MMD3) pour enregistre une indication d'heure de début (ha2, ha3) dans ledit contexte (CT) d'un circuit virtuel, à l'arrivée d'une cellule de ce circuit virtuel, des moyens (MMD2, MMD3) pour, à l'arrivée d'une cellule suivante du même circuit virtuel, lire ledit contexte dans l'emplacement de mémoire affecté à ce circuit virtuel, des moyens (MMD2, MMD3) pour soustraire de l'heure courante (hc), alors fournie par ladite horloge ladite heure de début (ha2, ha3), une deuxième différence de temps (hc - ha2, hc - ha3) étant ainsi établie et constituant une mesure de débit instantané (Dm2, Dm3) du circuit virtuel, définie comme l'intervalle de temps qui s'est écoulée entre deux cellules, des moyens (MMD2, MMD3) pourfournir cette mesure de débit instantané à des moyens d'évaluation (MDR, MRR, MGC), en vue de déterminer la nécessité d'une action corrective (OSC), et des moyens (MMD2, MMD3) pour déterminer alors l'enregistrement de ladite heure courante (hc) dans le contexte, en tant qu'heure de début (ha2, ha3).

12. Dispositif d'évaluation du débit de circuits virtuels empruntant une voie de transmission à multiplexage temporel asynchrone conforme à la revendication 11, caractérisé en ce que le contexte (CT) comprend un compte de cellules reçues (n3) et en ce que sont prévus des moyens (MMD3) pour incrémenter ce compte à la réception de chaque cellule du circuit virtuel, des moyens (MMD3) pour comparer le compte incrémenté avec une valeur de compte spécifiée (N) fournie par le contexte (CT), et des moyens (MMD3) opérant seulement lorsque ladite valeur de compte spécifiée est atteinte par ledit compte de cellules reçues, pour fournir ladite différence de temps (Dm3) comme mesure de débit instantané du circuit virtuel, définie comme l'intervalle de temps qui s'est écoulé entre deux cellules non consécutives, tandis que ledit compte de cellules reçues (n3) est réinitialisé.

13. Dispositif d'évaluation du débit de circuits virtuels empruntant une voie de transmission à multiplexage temporel asynchrone conforme à la revendication 10, 11 ou 12, caractérisé en ce que des moyens (MRR) sont prévus pour accumuler plusieurs d'une desdites mesures de débit (Dm1, Dm2, Dm3), successivement établies pour un même circuit virtuel, et pour les présenter ensemble comme une mesure de débit accumulé (RRm).

14. Dispositif d'évaluation du débit de circuits virtuels empruntant une voie de transmission à multiplexage temporel asynchrone conforme à la revendication 10, 11 , 12 ou 13, caractérisé en ce que le contexte (CT) comprend au moins un compteur de débit (Cpi) et que des moyens (MGC1) sont prévus pour en modifier le contenu par addition de la différence entre une valeur déterminée (Ds), correspondant à un débit autorisé, et une desdites mesures de débit (Dm1, Dm2, Dm3, RRm), ainsi que des moyens (MGC1) pour comparer la position atteinte par ce compteur de débit par rapport à une position extrême spécifiée, puis, si cette position extrême est atteinte ou dépassée, pour émettre un signal (OSC1 ) manifestant la nécessite d'une action corrective.

15. Dispositif d'évaluation du débit de circuits virtuels empruntant une voie de transmission à multiplexage temporel asynchrone conforme à la revendication 10, 11 , 12 ou 13, caractérisé en ce que le contexte (CT) comprend au moins un seuil de débit (Di) et en ce que des moyens (MQR1) sont prévus pour comparer une desdites mesures de débit (Dm1, Dm2, Dm3, RRm) avec ce seuil et des moyens (MGC2) pour actionner un compteur de débit (CPi), dans un premier sens, si ce seuil est atteint ou dépassé, ou dans l'autre sens, si ce seuil n'est pas atteint, des moyens (MGC2) étant en outre prévus afin de déterminer qu'un tel actionnement a amené le compteur de débit dans une position extrême dudit premier sens, et alors de fournir un signal (OSC1 ) manifestant la nécessité d'une action corrective.

16. Dispositif d'évaluation du débit de circuits virtuels empruntant une voie de transmission à multiplexage temporel asynchrone conforme à la revendication 10, 11, 12 ou 13, caractérisé en ce que ledit contexte (CT) comprend au moins une donnée qui est une valeur de compte (SPi), et aussi plusieurs seuils de débit (Di, Di + Da...) et en ce qu'il est prévu de comparer une desdites mesures de débits (Dm1, Dm2, Dm3, RRm) avec ces seuils, pour déterminer dans quel intervalle entre seuils (Rij) elle se trouve, et en ce qu'il est prévu de modifier ladite valeur de compte (SPi) d'une quantité qui est fonction dudit intervalle déterminé (Rij), ainsi que de déterminer l'arrivée en position extrême dans un premier sens de cette valeur de compte, et alors d'émettre un signal (OSC2) manifestant la nécessité d'une action correctrice.

17. Dispositif d'évaluation du débit de circuits virtuels empruntant une voie de transmission à multiplexage temporel asynchrone conforme à l'une quelconque des revendications 10 à 16, caractérisé en ce que le contexte (CT) comprend une indication de débit maximal autorisé (Dsm) et en ce que des moyens (MSC) sont prévus pour comparer, à l'arrivée de chaque cellule, le débit observé (n1x) avec ladite indication de débit maximal et, au cas où le débit observé atteint ou dépasse ledit débit maximal autorisé, pour fournir ledit signal (OSC3) manifestant la nécessité d'une action corrective.

18. Dispositif d'évaluation du débit de circuits virtuels empruntant une voie de transmission à multiplexage temporel asynchrone conforme à la revendication 17, caractérisé en ce que des moyens (MSC) sont prévus pour, à l'arrivée en position extrême dudit compteur de débit ou de ladite valeur de compte enregistrer dans le contexte (CT) une valeur de débit limite (Dsa) dépendant du seuil de débit associé, qui remplit le même rôle que ladite indication de débit maximal autorisé (Dsm).

19. Dispositif d'évaluation du débit de circuits virtuels empruntant une voie de transmission à multiplexage temporel asynchrone conforme à l'une quelconque des revendications 10 à 18 caractérisé en ce que ladite horloge fournit l'heure courante associée au circuit virtuel par le moyen d'un module de sélection d'horloge commandé par une indication de sélection d'horloge (selh) fournie par ledit contexte du circuit virtuel et qui sélectionne en conséquence un groupe de sorties (M1 à Mm) d'une horloge-mère (CB), la sortie de poids le plus faible caractérisant une unité déterminée dans laquelle sont mesurées les durées intervenant dans les évaluations de débit, cette unité déterminée étant choisie de façon à permettre d'atteindre la précision désirée dans ces évaluations.

## Patentansprüche

1. Verfahren zur Bestimmung des Durchsatzes virtueller Kreise, die Datenzellen übertragen und über einen Übertragungskanal mit asynchroner Zeitmultiplexierung verlaufen, unter Verwendung eines Speichers, in dem jedem virtuellen Kreis ein Speicherraum mit einer Gruppe von Daten zugeteilt ist, die Kontext genannt wird und die Bedingungen der Ermittlung des Durchsatzes dieses virtuellen Kreises definiert, wobei beim Empfang jeder Zelle der Kontext des virtuellen Kreises, zu dem diese Zelle gehört, zur Ermittlung des Durchsatzes dieses virtuellen Kreises gelesen wird, wobei das Verfahren außerdem in der Verwendung eines Taktgebers besteht, der eine laufende, diesem virtuellen Kreis zugeordnete Uhrzeit liefert, und zwar ausgedrückt in einem bestimmten Einheitensystem, dadurch gekennzeichnet, daß eine Angabe der Anfangsuhrzeit des Meßintervalls (ha1) im Kontext (CT) eines virtuellen Kreises beim Eintreffen einerZelle dieses virtuellen Kreises registriert wird, daß beim Eintreffen einer nächsten Zelle dieses selben virtuellen Kreises der Kontext an der diesem virtuellen Kreis zugewiesenen Speicherstelle gelesen wird, daß von der dann von diesem Taktgeber gelieferten laufenden Uhrzeit (hc) die von dem gelesenen Kontext gelieferte Anfangsuhrzeit (ha1) abgezogen wird und so eine Zeitdifferenz (hc-ha1) ermittelt wird, daß der Kontext weiter eine besondere Dauer des Meßintervalls (T) und eine Anzahl der bereits empfangenen Zellen (n1) enthält und daß beim Empfang jeder Zelle die Zeitdifferenz (hc-ha1) und das Meßzeitintervall (T) verglichen werden und die Anzahl der bereits empfangenen Zellen (n1) inkrementiert wird, solange die Zeitdifferenz kürzer als das Meßzeitintervall bleibt, während die Anzahl (n1) von bereits empfangenen Zellen als Maß für den mittleren Durchsatz (Dm1) des virtuellen Kreises nur dann geliefert wird, wenn die Zeitdifferenz mindestens gleich dem Meßzeitintervall ist, wobei zugleich die Anzahl der bereits empfangenen Zellen (n1) und die Anfangsuhrzeit des Meßintervalls (ha1) rückgesetzt werden.

2. Verfahren nach Anspruch 1 zur Bestimmung des Durchsatzes virtueller Kreise, die über einen Übertragungskanal mit asynchroner Zeitmultiplexierung verlaufen, dadurch gekennzeichnet, daß eine Angabe der Anfangsuhrzeit (ha2, ha3) ebenfalls im Kontext (CT) eines virtuellen Kreises bei Eintreffen einer Zelle dieses virtuellen Kreises registriert wird, daß beim Eintreffen der nächsten Zelle dieses selben virtuellen Kreises der Kontext an der diesem virtuellen Kreis zugewiesenen Speicherzelle gelesen wird, daß von der dann von diesem Taktgeber gelieferten laufenden Uhrzeit (hc) die von dem gelesenen Kontext gelieferte Anfangsuhrzeit (ha2, ha3) abgezogen wird, wobei so eine zweite Zeitdifferenz (hc-ha2, hc-ha3) ermittelt wird, die ein Maß für den augenblicklichen Durchsatz (Dm2, Dm3) des virtuellen Kreises bildet und als das zwischen zwei Zellen ablaufende Zeitintervall definiert ist, ausgedrückt in dem bestimmten Einheitensystem, daß dieses Maß des augenblicklichen Durchsatzes an Auswertungsmittel (MQR, MRR, MGC) gemeldet wird, um die Notwendigkeit einer Korrekturaktion zu bestimmen, und daß die laufende Uhrzeit (hc) dann im Kontext als Anfangszeit registriert wird.

3. Verfahren nach Anspruch 2 zur Bestimmung des Durchsatzes von über einen Übertragungskanal mit asynchroner Zeitmultiplexierung verlaufenden virtuellen Kreisen, dadurch gekennzeichnet, daß der Kontext (CT) ein Konto von empfangenen Zellen (n3) enthält und daß dieses Konto bei Empfang jeder Zelle des virtuellen Kreises inkrementiert wird, worauf das inkrementierte Konto mit einem speziellen Kontowert (N) verglichen wird, und daß nur, wenn der spezielle Kontowert von dem Konto der empfangenen Zellen erreicht wird, die Zeitdifferenz als Maß für den augenblicklichen Durchsatz (Dm3) des virtuellen Kreises geliefert wird, definiert als das Zeitintervall, das zwischen zwei nicht aufeinanderfolgenden Zellen liegt, während das Konto der empfangenen Zellen (n3) rückgestellt wird.

4. Verfahren zur Bestimmung des Durchsatzes von über einen Übertragungskanal mit asynchroner Zeitmultiplexierung verlaufenden virtuellen Kreisen nach Anspruch 1, 2 oder 3, dadurch gekennzeichnet, daß mehrere der nacheinander für denselben virtuellen Kreis ermittelten Durchsatzmeßwerte (Dm1, Dm2, Dm3) akkumuliert werden und der kumulierte Wert als kumulierter Durchsatzmeßwert (RRm) ausgegeben wird.

5. Verfahren zur Bestimmung des Durchsatzes von über einen Übertragungskanal mit asynchroner Zeitmultiplexierung verlaufenden virtuellen Kreisen nach Anspruch 1, 2, 3 oder 4, dadurch gekennzeichnet, daß der Kontext (CT) mindestens eine Angabe enthält, die einen Durchsatzzähler (CPi) bildet, und daß der Inhalt dieses Zählers durch Addition der Differenz zwischen einem bestimmten Wert (Ds), der einem zugelassenen Durchsatz entspricht und in dem bestimmten Einheitensystem ausgedrückt wird, und einem der Durchsatzmeßwerte (Dm1, Dm2, Dm3, RRm) verändert wird, worauf die von diesem Durchsatzzähler erreichte Position mit einer speziellen Endposition verglichen wird, worauf ein Signal (OSC1) ausgegeben wird, das die Notwendigkeit einer Korrekturaktion angibt, wenn diese Endposition erreicht oder überschritten ist.

6. Verfahren zur Bestimmung des Durchsatzes von über einen Übertragungskanal mit asynchroner Zeitmultiplexierung verlaufenden virtuellen Kreisen nach Anspruch 1, 2, 3 oder 4, dadurch gekennzeichnet, daß mehrere Durchsatzschwellen (Di, Di+Da, ...) und ein Kontowert (SPi) vorgesehen sind und daß einer dieser Durchsatzmeßwerte (Dm1, Dm2, Dm3, RRm) mit diesen Schwellen verglichen wird, um zu bestimmen, in welchem Intervall zwischen Schwellen (RiO, Ri1, ...) der Meßwert liegt, und daß der Kontowert abhängig von dem bestimmten Intervall verändert wird, worauf man das Erreichen der Endposition dieses Kontowerts in einer ersten Richtung feststellt, um dann das Signal (OSC2) auszugeben, das die Notwendigkeit einer Korrekturaktion feststellt.

7. Verfahren zur Bestimmung des Durchsatzes von über einen Übertragungskanal mit asynchroner Zeitmultiplexierung verlaufenden virtuellen Kreisen nach Anspruch 1, 2, 3 oder 4, dadurch gekennzeichnet, daß der Kontext (CT) mindestens eine Durchsatzschwelle (Di) besitzt und daß einer der Durchsatzmeßwerte (Dm1, Dm2, Dm3, RRm) mit dieser Schwelle verglichen wird und ein Durchsatzzähler (CPi) in einer ersten Richtung inkrementiert wird, wenn diese Schwelle erreicht oder überschritten wurde (R1 i), oder in der anderen Richtung inkrementiert wird, wenn diese Schwelle nicht erreicht wurde (R1 i), und daß festgestellt wird, ob eine solche Inkrementierung den Durchsatzzähler in eine Endposition in der ersten Richtung gebracht hat, worauf ein Signal (OSC1) ausgegeben wird, das die Notwendigkeit einer Korrekturaktion feststellt.

8. Verfahren zur Bestimmung des Durchsatzes von über einen Übertragungskanal mit asynchroner Zeitmultiplexierung verlaufenden virtuellen Kreisen nach einem beliebigen der vorhergehenden Ansprüche, dadurch gekennzeichnet, daß der Kontext (CT) eine Angabe über den maximal zulässigen Durchsatz (Dsm) enthält und daß bei Eintreffen jeder Zelle der beobachtete Durchsatz mit dieser Angabe des Maximaldurchsatzes verglichen wird, worauf das Signal ausgegeben wird, das die Notwendigkeit einer Korrekturaktion feststellt, wenn der beobachtete Durchsatz den maximal zulässigen Durchsatz erreicht oder überschreitet.

9. Verfahren zur Bestimmung des Durchsatzes von über einen Übertragungskanal mit asynchroner Zeitmultiplexierung verlaufenden virtuellen Kreisen nach Anspruch 8, dadurch gekennzeichnet, daß bei Erreichen der Endposition des Durchsatzzählers (CPi) oder des Kontowerts (SPi) ein Grenzdurchsatzwert (Dsa) im Kontext angewendet wird, der von der zugeordneten Durchsatzschwelle abhängt und dieselbe Aufgabe wie die Angabe über den zulässigen maximalen Durchsatz (Dsm) übernimmt.

10. Vorrichtung zur Bestimmung des Durchsatzes von virtuellen Kreisen, die Zellen übertragen und über einen Übertragungskanal mit asynchroner Zeitmultiplexierung verlaufen, wobei diese Vorrichtung in den Übertragungskanal eingefügt ist und einen Speicher enthält, in dem jedem virtuellen Kreis ein Speicherraum mit einer Gruppe von Daten zugewiesen ist, die Kontext genannt wird und die Ermittlungsbedingungen für den Durchsatz dieses virtuellen Kreises definiert, wobei weiter Mittel vorgesehen sind, um bei Empfang einer Zelle den Kontext des virtuellen Kreises zu lesen, zu dem diese Zelle gehört, um den Durchsatz dieses virtuellen Kreises zu ermitteln, sowie ein Taktgeber, der eine diesem virtuellen Kreis zugewiesene laufende Uhrzeit liefert, ausgedrückt in einem bestimmten Einheitensystem, dadurch gekennzeichnet, daß die Vorrichtung Mittel (MMD1) zur Registrierung einer Angabe bezüglich der Anfangsuhrzeit des Zeitintervalls (ha1) im Kontext (CT) eines virtuellen Kreises beim Eintreffen einer Zelle dieses virtuellen Kreises, Mittel (MMD1), um beim Eintreffen einer nachfolgenden Zelle desselben virtuellen Kreises den Kontext an der diesem virtuellen Kreis zugeordneten Speicherstelle zu lesen, und Mittel (MMD1) enthält, um von der dann von dem Taktgeber gelieferten laufenden Uhrzeit (hc) die vom gelesenen Kontext gelieferte Anfangsuhrzeit (ha1) abzuziehen, wobei eine erste Zeitdifferenz (hc-ha 1) ermittelt wird, daß der Kontext (CT) weiter eine besondere Dauer des Meßintervalls (T) und eine Anzahl von bereits empfangenen Zellen (n1) enthält, und daß Mittel (MMD1), um beim Empfang jeder Zelle die Zeitdifferenz und die Dauer des Meßintervalls miteinander zu vergleichen, Mittel (MMD1), um die Anzahl der bereits empfangenen Zellen (n1) zu inkrementieren, solange die Zeitdifferenz kleiner als die Dauer des Meßintervalls bleibt, und Mittel vorgesehen sind, um die Anzahl (n) von bereits empfangenen Zellen als Maß für den mittleren Durchsatz (Dm1) des virtuellen Kreises nur dann zu liefern, wenn die Zeitdifferenz mindestens gleich der Dauer des Meßintervalls ist, wobei gleichzeitig die Anzahl der bereits empfangenen Zellen (n1) und die Anfangszeit des Meßintervalls (ha1) rückgestellt werden.

11. Vorrichtung nach Anspruch 10 zur Ermittlung des Durchsatzes von virtuellen Kreisen, die über einen Übertragungskanal mit asynchroner Zeitmultiplexierung verlaufen, dadurch gekennzeichnet, daß Mittel (MMD2, MMD3) zur Registrierung einerAngabe bezüglich der Anfangsuhrzeit (ha2, ha3) im Kontext (CT) eines virtuellen Kreises beim Eintreffen einer Zelle dieses virtuellen Kreises, Mittel (MMD2, MMD3), um beim Eintreffen einer folgenden Zelle des selben virtuellen Kreises den Kontext an der diesem virtuellen Kreis zugeordneten Speicherstelle zu lesen, Mittel (MMD2, MMD3), um von der dann vom Taktgeber gelieferten laufenden Uhrzeit (hc) die vom gelesenen Kontext gelieferte Anfangsuhrzeit (ha2, ha3) anzuziehen, wobei so eine zweite Zeitdifferenz (hc - ha2, hc - ha3) ermittelt wird, die ein Maß für den augenblicklichen Durchsatz (Dm2, Dm3) des virtuellen Kreises bildet, das als das Zeitintervall zwischen zwei Zellen definiert ist, weiter Mittel (MMD2, MMD3), um dieses Maß des augenblicklichen Durchsatzes an Auswertungsmittel (MDR, MRR, MGC) zu liefern, die die Notwendigkeit einer Korrekturaktion (OSC) bestimmen, und Mittel (MMD, MMD3) vorgesehen sind, um die Registrierung der laufenden Uhrzeit (hc) im Kontext als Anfangsuhrzeit (ha2, ha3) zu bestimmen.

12. Vorrichtung nach Anspruch 11 zur Ermittlung des Durchsatzes von virtuellen Kreisen, die über Übertragungskanäle mit asynchroner Zeitmultiplexierung verlaufen, dadurch gekennzeichnet, daß der Kontext (CT) ein Konto der empfangenen Zellen (n3) enthält und daß Mittel (MMD3) zur Inkrementierung dieses Kontos bei Empfang jeder Zelle des virtuellen Kreises, Mittel (MMD3) zum Vergleich des inkrementierten Kontos mit einem speziellen Kontowert (N), der vom Kontext geliefertwird, und Mittel (MMD3) vorgesehen sind, die nur wirksam werden, wenn der spezielle Kontowert von dem Konto der empfangene Zellen erreicht wurde, um die Zeitdifferenz (Dm3) als Maß für den augenblicklichen Durchsatz des virtuellen Kreises in Form des Zeitintervalls zwischen zwei nicht aufeinanderfolgenden Zellen zu liefern, worauf das Konto von empfangenen Zellen (n3) rückgestellt wird.

13. Vorrichtung nach Anspruch 10, 11 oder 12 zur Ermittlung des Durchsatzes von virtuellen Kreisen, die über Übertragungskanäle mit asynchronerZeitmultiplexierung verlaufen, dadurch gekennzeichnet, daß Mittel (MRR) vorgesehen sind, um mehrere der Durchsatzmeßwerte (Dm1, Dm2, Dm3), die nacheinanderfür denselben virtuellen Kreis erstellt worden sind, zu akkumulieren und um diesen Wert als akkumulierten Durchsatzmeßwert (RRm) anzugeben.

14. Vorrichtung nach Anspruch 10, 11, 12 oder 13 zur Ermittlung des Durchsatzes von virtuellen Kreisen, die über Übertragungskanäle mit asynchroner Zeitmultiplexierung verlaufen, dadurch gekennzeichnet, daß der Kontext (CT) mindestens einen Durchsatzzähler (Cpi) enthält, und daß Mittel (MGC1), um den Inhalt dieses Zählers durch Addition der Differenz zwischen einem bestimmten Wert (Ds) entsprechend einem zugelassenen Durchsatz und einem der Durchsatzmeßwerte (Dm1, Dm2, Dm3, RRm) zu verändern, sowie Mittel (MGC1) vorgesehen sind, um die von diesem Durchsatzzähler erreichte Position mit einer speziellen Endposition zu vergleichen sowie um ein Signal (OSC1) auszugeben, das die Notwendigkeit einer Korrekturaktion feststellt, wenn die Endposition erreicht oder überschritten ist.

15. Vorrichtung nach Anspruch 10, 11, 12 oder 13 zur Ermittlung des Durchsatzes von virtuellen Kreisen, die über Übertragungskanäle mit asynchroner Zeitmultiplexierung verlaufen, dadurch gekennzeichnet, daß der Kontext (CT) mindestens eine Durchsatzschwelle (Di) enthält und daß Mittel (MQR1), um einen der Durchsatzmeßwerte (Dm1, Dm2, Dm3, RRm) mit dieser Schwelle zu vergleichen, Mittel (MGC2), um einen Durchsatzzähler (CPi) in einer ersten Richtung zu inkrementieren, wenn diese Schwelle erreicht oder überschritten ist, oder in der anderen Richtung, wenn diese Schwelle noch nicht erreicht ist, und Mittel (MGC2) vorgesehen sind, um zu bestimmen, ob eine solche Inkrementierung den Durchsatzzähler in eine Endposition in der ersten Richtung gebracht hat, worauf ein Signal (OSC1) geliefert wird, das die Notwendigkeit einer Korrekturoperation feststellt.

16. Vorrichtung nach Anspruch 10, 11, 12 oder 13 zur Ermittlung des Durchsatzes von virtuellen Kreisen, die über Übertragungskanäle mit asynchroner Zeitmultiplexierung verlaufen, dadurch gekennzeichnet, daß der Kontext (CT) mindestens eine Angabe, die ein Kontowert (SPi) ist, sowie außerdem mehrere Durchsatzschwellen (Di, Di+Da, ...) enthält und daß Mittel zum Vergleich eines der Durchsatzmeßwerte (Dm1, Dm2, Dm3, RRm) mit diesen Schwellen und Mittel vorgesehen sind, um zu bestimmen, in welchem Intervall zwischen Schwellen (Rij) der Meßwert sich befindet, und daß Mittel zur Veränderung des Kontowerts (SPi) um eine Größe, die von dem vorbestimmten Intervall (Rij) abhängt, sowie Mittel vorgesehen sind, um das Erreichen einer Endposition in einer Richtung für diesen Kontowert zu bestimmen und dann ein Signal (OSC2) auszugeben, das die Notwendigkeit einer Korrekturaktion feststellt.

17. Vorrichtung nach einem beliebigen der Ansprüche 10 bis 16 zur Ermittlung des Durchsatzes von virtuellen Kreisen, die über Übertragungskanäle mit asynchroner Zeitmultiplexierung verlaufen, dadurch gekennzeichnet, daß der Kontext (CT) eine Angabe über den höchstzulässigen Durchsatz (Dsm) enthält und daß Mittel (MSC) vorgesehen sind, um beim Eintreffen jeder Zelle den beobachteten Durchsatz (n1x) mit der Angabe des höchstzulässigen Durchsatzes zu vergleichen und ein Signal (OSC3) auszugeben, das die Notwendigkeit einer Korrekturaktion feststellt, wenn der beobachtete Durchsatz den höchstzulässigen Durchsatz erreicht oder überschreitet.

18. Vorrichtung nach Anspruch 17 zur Ermittlung des Durchsatzes von virtuellen Kreisen, die über Übertragungskanäle mit asynchroner Zeitmultiplexierung verlaufen, dadurch gekennzeichnet, daß Mittel (MSC) vorgesehen sind, um im Kontext (CT) einen von der zugeordneten Durchsatzschwelle abhängenden Durchsatz-Grenzwert (Dsa) einzutragen, der dieselbe Aufgabe wie die Angabe über den höchstzulässigen Durchsatz (Dsm) erfüllt, wenn der Durchsatzzähleroderder Kontowert die Endposition erreicht.

19. Vorrichtung nach einem beliebigen der Ansprüche 10 bis 18 zur Ermittlung des Durchsatzes von virtuellen Kreisen, die über Übertragungskanäle mit asynchroner Zeitmultiplexierung verlaufen, dadurch gekennzeichnet, daß der Taktgeber die laufende Uhrzeit liefert, die dem virtuellen Kreis über einen Taktselektionsmodul zugeordnet ist, der von einer vom Kontext des virtuellen Kreises gelieferten Taktselektionsangabe (selh) gesteuert wird und dementsprechend eine Gruppe von Ausgängen (M1 bis Mm) eines Haupttaktgebers (CB) auswählt, wobei die Ausgänge der geringsten Wichtung ein bestimmtes Einheitensystem kennzeichnen, in dem die Zeiten gemessen werden, die bei der Ermittlung des Durchsatzes eine Rolle spielen, wobei dieses Einheitensystem so gewählt ist, daß die gewünschte Genauigkeit bei der Ermittlung erreicht wird.

## Claims

1. Method for evaluating the throughput of virtual circuits carrying cells and employing an asynchronous time-division multiplexed transmission channel comprising the use of a memory in which, for each virtual circuit, a memory location is assigned containing a set of data, referred to hereinafter as the context, defining the conditions of evaluation of the throughput of this virtual circuit and providing for, upon reception of each cell, reading of the context of the virtual circuit to which said cell belongs, for the purpose of evaluating the throughput of the virtual circuit, the method further comprising the use of a clock signal adapted to supply a current time associated with this virtual circuit, expressed in a determined unit, characterised in that a measurement interval start time indication (ha1) is written into said context (CT) of a virtual circuit, upon the arrival of a cell of this virtual circuit, in that, upon the arrival of a following cell of this same virtual circuit, said context is read at the memory location assigned to this virtual circuit, in that the measurement interval start time (ha1) supplied by the context as read is subtracted from the current time (hc), now supplied by said clock signal, a time difference (hc - ha1) being therefore established, in that said context (CT) also includes a specified measurement interval duration (T) and a number (n1) of cells already received, and in that provision is made for comparing, upon reception of each cell, said time difference (hc - ha1) and said measurement interval duration (T) and for incrementing said number (n1) of cells already received if said time difference is less than said measurement interval duration and said number (n1) of cells already received is supplied as a measure of the mean throughput (Dm1) of the virtual circuit only if said time difference is equal to or greater than said time measurement interval duration and at the same time said number (n1) of cells already received and the measurement interval start time (ha1) are reinitialised.

2. Method according to claim 1 for evaluating the throughput of virtual circuits employing an asynchronous time-division multiplexed transmission channel characterised in that a starting time indication (ha2, ha3) is additionally recorded in said context (CT) of a virtual circuit, upon reception of a cell of said virtual circuit, and in that, upon reception of a following cell of the same virtual circuit, said context is read at the memory location assigned to said virtual circuit, in that said starting time (ha2, ha3) supplied by the context as read is subtracted from the current time (hc) now supplied by said clock signal, a second time difference (hc - ha2, hc - ha3) being therefore established and constituting a measure of the instantaneous throughput (dm2 - dm3) of the virtual circuit, defined as the time interval that has elapsed between two cells, expressed in said determined unit, in that this instantaneous throughput measurement is supplied to evaluation means (MQR, MRR, MGC) to determine the necessity for corrective action, and in that said current time (hc) is then recorded in the context as the starting time.

3. Method according to claim 2 for evaluating the throughput of virtual circuits employing an asynchronous time-division multiplexed transmission channel, characterised in that the context (CT) includes a count of received cells (n3) and this count is incremented upon reception of each cell of the virtual circuit, after which the incremented count value is compared with a specified count value (N) and, only when said specified countval- ue is reached by said received cell count, said time difference is supplied as a measurement of the instantaneous throughput (Dm3) of the virtual circuit, defined as the time interval that has elapsed between two non-consecutive cells, while said received cell count (n3) is reinitialised.

4. Method according to claim 1 or 2 or 3 for evaluating the throughput of virtual circuits employing an asynchronous time-division multiplexed transmission channel, characterised in that provision is made to accumulate several of said throughput measurements (Dm1, Dm2, Dm3) successively established for a given virtual circuit and for presenting the accumulated value as a measurement of the accumulated throughput (RRm).

5. Method according to claim 1 or2or 3or4forevaI- uating the throughput of virtual circuits employing an asynchronous time-division multiplexed transmission channel, characterised in that the context (CT) includes at least one item of data constituting a throughput counter (CPi) and that provision is made to modify the content thereof by adding the difference between a determined value (Ds) corresponding to an authorised throughput, expressed in said determined unit, and one of said throughput measurements (Dm1, Dm2, Dm3, RRm), and then for comparing the position reached by this throughput counter compared to a specified extreme position and, if this extreme position is reached or exceeded, for issuing a signal (OSC1) indicating the need for corrective action.

6. Method according to claim 1 or2or3or4forevai- uating the throughput of virtual circuits employing an asynchronous time-division multiplexed transmission channel, characterised in that several throughput thresholds (Di, Di+Da, ...) and a count value (SPi) are provided and that provision is made to compare one of said throughput measurements (Dm1, Dm2, Dm3, RRm) with these thresholds in order to determine within which interval between thresholds (RiO, Ri1, ...) said measurement lies, and for modifying said count value as a function of said determined interval, and further for determining the arrival at an extreme position in a first direction of this count value in order then to supply said signal (OSC2) indicating the need for corrective action.

7. Method according to claim 1 or2or 3or4forevaI- uating the throughput of virtual circuits employing an asynchronous time-division multiplexed transmission channel, characterised in that said context (CT) includes at least one throughput threshold (Di) and in that provision is made for comparing one of said throughput measurements (Dm1, Dm2, Dm3, RRm) with this threshold and for starting a throughput counter (CPi) in a first direction if this threshold is reached or exceeded (R1 i) or in another direction if this threshold is not reached (R1 i), as well as for determining that said starting action has brought the throughput counter to an extreme position of said first direction, and for then supplying a signal (OSC1) indicating the need for corrective action.

8. Method according to any one of the preceding claims for evaluating the throughput of virtual circuits employing an asynchronous time-division multiplexed transmission channel, characterised in that said context (CT) includes an indication of the authorised maximum throughput (Dsm) and in that provision is made for comparing, upon arrival of each cell, the observed throughput with said maximum throughput indication and, where said observed throughput reaches or exceeds said authorised maximum throughput, for supplying said signal indicating the need for corrective action.

9. Method according to claim 8 for evaluating the throughput of virtual circuits employing an asynchronous time-division multiplexed transmission channel, characterised in that arrival at the extreme position of said throughput counter (CPi) or said count value (SPi) gives rise to enforcement within said context of a limiting throughput value (Dsa) dependent upon the associated throughput threshold, fulfilling the same function as said maximum authorised throughput indication (Dsm).

10. Device for evaluating the throughput of virtual circuits carrying cells and employing an asynchronous time-division multiplexed transmission channel, said device being inserted into the transmission channel and comprising a memory in which, for each virtual circuit, a memory location is assigned, containing a set of data, referred to hereinafter as the context, defining the conditions of evaluation of the throughput of this virtual circuit, means for, upon reception of a cell, reading the context of the virtual circuit to which this cell belongs, in order to evaluate the throughput of this virtual circuit, together with a clock signal source adapted to supply a current time associated with this virtual circuit, expressed in a determined unit, characterised in that it includes means (MMD1) for writing an indication of the starting time of a time interval (ha1) in said context (CT) of a virtual circuit, upon arrival of a cell for this virtual circuit, means (MMD1) for, upon arrival of a following cell for this same virtual circuit, reading said context at the memory location assigned to this virtual circuit, means (MMD1) for subtracting from the current time (hc), now supplied by said clock signal, the starting time (ha1) supplied by the context as read, a first time difference (hc - ha1) being therefore established, in that said context (CT) also includes a specified measurement interval duration (T) and a number (n1) of cells already received, and in that means (MMD1) are provided for comparing, upon reception of each cell, said time difference and said measurement interval duration, means (MMD1) are provided for then incrementing said number (n1) of cells already received if said time difference is less than said measurement interval duration and means are provided for supplying said number (n1) of cells already received as a measure of the mean throughput (Dm1) of the virtual circuit only if said time difference is equal to or greater than said measurement interval duration and for reinitialis- ing at the same time said number (n1) of cells already received and the measurement interval start time (ha1).

11. Device according to claim 10 for evaluating the throughput of virtual circuits employing an asynchronous time-division multiplexed transmission channel characterised in that it includes means (MMD2, MMD3) for recording a starting time indication (ha2, ha3) in said context (CT) of a virtual circuit, upon reception of a cell of said virtual circuit, means (MMD2, MMD3) for reading, upon reception of a following cell of the same virtual circuit, said context at the memory location assigned to said virtual circuit, means (MMD2, MMD3) for subtracting said starting time (ha2, ha3) from the current time (hc) now supplied by said clock signal, a second time difference (hc - ha2, hc - ha3) being therefore established and constituting a measurement of the instantaneous throughput (Dm2, Dm3) of the virtual circuit, defined as the time interval that has elapsed between two cells, means (MMD2, MMD3) for supplying this instantaneous throughput measurement to evaluation means (MDR, MRR, MGC) to determine the necessity for corrective action (OSC), and means (MMD2, MMD3) for recording said current time (hc) in the context as the starting time (ha2, ha3).

12. Device according to claim 11 for evaluating the throughput of virtual circuits employing an asynchronous time-division multiplexed transmission channel, characterised in that said context (CT) includes a received cell count (n3) and in that means (MMD3) are provided for incrementing this count upon reception of each cell of the virtual circuit, means (MMD3) are provided forcom- paring the incremented count with a specified count value (N) supplied by the context (CT), and means (MMD3) are provided that only operate when said specified count value is reached by said received cell count in order to supply said time difference (Dm3) as a measurement of instantaneous throughput of the virtual circuit, defined as the time interval that has elapsed between two non-consecutive cells, while said received cell count (n3) is reinitialised.

13. Device according to claim 10, 11 or 12 for evaluating the throughput of virtual circuits employing an asynchronous time-division multiplexed transmission channel, characterised in that means (MMR) are provided for accumulating several of said throughput measurements (Dm1, Dm2, Dm3) successively established for a given virtual circuit and for presenting them together as a measurement of accumulated throughput (RRm).

14. Device according to claim 10, 11, 12 or 13 for evaluating the throughput of virtual circuits employing an asynchronous time-division multiplexed transmission channel, characterised in that the context (CT) includes at least one throughput counter(Cpi), and means (MGC1) are provided for modifying the content thereof by adding the difference between a determined value (Ds) corresponding to an authorised throughput and one of said throughput measurements (Dm1, Dm2, Dm3, RRm) as well as means (MGC1) for comparing the position reached by this throughput counter with a specified extreme position and then, if this extreme position is reached or exceeded, issuing a signal (OSC1) indicating the need for corrective action.

15. Device according to claims 10, 11, 12 or 13 for evaluating the throughput of virtual circuits employing an asynchronous time-division multiplexed transmission channel, characterised in that the context (CT) includes at least one throughput threshold (Di) and in that means (MQR1) are provided for comparing one of said throughput measurements (Dm1, Dm2, Dm3, RRm) with this threshold and means (MGC2) are provided for starting a throughput counter (CPi) in a first direction if this threshold is reached or exceeded or in the other direction if this threshold is not reached, means (MGC2) being furthermore provided in order to determine that said starting action has brought the throughput counter to an extreme position of said first direction and for then supplying a signal (OSC1) indicating the need for corrective action.

16. Device according to claim 10, 11, 12 or 13 for evaluating the throughput of virtual circuits employing an asynchronous time-division multiplexed transmission channel, characterised in that said context (CT) includes at least one item of data which is a count value (SPi) and several throughput thresholds (Di, Di + Da, ...), in that provision is made for comparing one of said throughput measurements (Dm1, Dm2, Dm3, RRm) with these thresholds in order to determine in which interval between thresholds (Rij) said measurement lies and in that provision is made for modifying said count value (SPi) by an amount which is a function of said determined interval (Rij), as well as for determining arrival at the extreme position in a first direction of this count value and then issuing a signal (OSC2) indicating the need for corrective action.

17. Device according to any one of claims 10 to 16 for evaluating the throughput of virtual circuits employing an asynchronous time-division multiplexed transmission channel, characterised in that the context (CT) includes an indication of the maximum authorised throughput (Dsm) and in that means (MSC) are provided for comparing, upon the arrival of each cell, the observed throughput (n1x) with said indication of maximum throughput and in the case where the observed throughput reaches or exceeds said authorised maximum throughput for issuing said signal (OSC3) indicating the need for corrective action.

18. Device according to claim 17 for evaluating the throughput of virtual circuits employing an asynchronous time-division multiplexed transmission channel, characterised in that means (MSC) are provided for, upon said throughput counter or said count value reaching said extreme position, writing into said context (CT) a limiting throughput value (Dsa) which depends on the associated throughput threshold, which fulfils the same function as said authorised maximum throughput indication (Dsm).

19. Device according to any one of claims 10 to 18 for evaluating the throughput of virtual circuits employing an asynchronous time-division multiplexed transmission channel, characterised in that said clock signal source supplies the current time associated with the virtual circuit via a clock selection module commanded by a clock signal selection indication (selh) supplied by said context of the virtual circuit and which selects, as a consequence, a group of outputs (M1 to Mm) of a master clock (CB), the least significant bit output characterising a determined unit of measurement which is used for measuring the durations involved in the throughput evaluations, this determined unit being selected in order to enable the desired degree of accuracy in these evaluations to be achieved.
